# EUROPEAN PATENT SPECIFICATION

(11) **EP 3 518 569 B1**
(45) Date of publication and mention of the grant of the patent: **08.04.2020**
(21) Application number: 18209789.9
(22) Date of filing: 08.04.2015
(51) Int. Cl.: H04W 12/06, H04W 12/08, H04W 12/10, H04W 4/00

(54) **GPRS SYSTEM KEY ENHANCEMENT METHOD, SGSN DEVICE, UE, HLR/HSS AND GPRS SYSTEM**
GPRS-SYSTEMSCHLÜSSELVERBESSERUNGSVERFAHREN, SGSN-VORRICHTUNG, BENUTZERGERÄT, HLR-/HSS UND GPRS-SYSTEM
PROCÉDÉ D'AMÉLIORATION DE CLÉ DE SYSTÈME GPRS, DISPOSITIF SGSN, UE, HLR/HSS ET SYSTÈME GPRS

(43) Date of publication of application: 31.07.2019
(62) Divisional of application: 15888140.9
(73) Proprietor: Huawei Technologies Co., Ltd., Shenzhen, Guangdong 518129 (CN)
(72) Inventor: ZHANG, Lijia, Shenzhen, Guangdong 518129 (CN); GE, Cuili, Shenzhen, Guangdong 518129 (CN)
(74) Representative: Isarpatent

(56) References cited:
- CN-A- 101 123 778
- QUALCOMM INCORPORATED: "Some security analysis for GERAN CIoT", 3GPP DRAFT; S3-151119, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sorrento; 20150126 - 20150130 25 January 2015 (2015-01-25), XP050943307, Retrieved from the Internet: URL:http://www.3gpp.org/ftp/Meetings_3GPP_ SYNC/SA3/Docs/ [retrieved on 2015-01-25]
- "3rd Generation Partnership Project; Technical Specification Group Services and System Aspects; Study on security aspects of Machine-Type Communications (MTC) and other mobile data applications communications enhancements (Release 12)", 3GPP DRAFT; 33868-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 19 June 2014 (2014-06-19), XP050838130, Retrieved from the Internet: URL:http://www.3gpp.org/ftp/tsg_sa/WG3_Sec urity/TSGS3_75_Sapporo/SA#64/specs/ [retrieved on 2014-06-19]
- HUAWEI ET AL: "Solution of integrity protection for signalling", 3GPP DRAFT; S3-151257 PCR_ SOLUTION OF INTEGRITY PROTECTION FOR SIGNALLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. SA WG3, no. Nanjing; 20150420 - 20150424 13 April 2015 (2015-04-13), XP050962977, Retrieved from the Internet: URL:http://www.3gpp.org/ftp/tsg_sa/WG3_Sec urity/TSGS3_79_Nanjing/Docs/ [retrieved on 2015-04-13]

## Description

### TECHNICAL FIELD

This application relates to the communication security field, and in particular, to a GPRS system key enhancement method, an SGSN device, UE, an HLR/HSS, and a GPRS system.

### BACKGROUND

To implement a data transmission function, user equipment (User Equipment, UE) generally accesses a mobile communications network such as a general packet radio service (GPRS, General Packet Radio Service) network of an operator by using a subscriber identity module (SIM, Subscriber Identity Module) or a universal subscriber identity module (USIM, Universal Subscriber Identity Module), so as to communicate with other UE, people, or mobile networks. To ensure security of communication of the UE, before the UE accesses the mobile communications network, authentication between a network side and the UE generally needs to be performed so as to ensure validity of the network side and the UE, and a ciphering key and an integrity key are generated so as to provide ciphering protection and integrity protection for a communication message. However, in the prior art, when UE that uses a SIM accesses the GPRS network, only the network side can perform one-way authentication on the UE and perform ciphering protection on a communication message, whereas the UE cannot perform authentication on the network side and cannot perform integrity protection on a communication message. When UE that uses a USIM accesses the GPRS network, two-way authentication can be implemented between the network side and the UE. However, only ciphering protection can be performed on a communication message, and integrity protection cannot be provided for a communication message. Existent security threats are as follows: In one aspect, if the UE cannot perform authentication on a message from the network side, the UE may suffer an attack from a rogue base station. In another aspect, if integrity protection cannot be provided for a communication message, communication between the UE and the network side may suffer an algorithm degrading attack, and a potential security risk such as eavesdropping or tampering of communication content may even exist. For some UEs that require high-security communication, such as Internet of Things UE and machine to machine communication UE, a method needs to be urgently provided to enhance security of communication of this type of UE in the GPRS network.

"Some security analysis for GERAN CIoT", QUALCOMM INCORPORATED, vol. SA WG3, no. Sorrento; 20150126 - 201501303GPP DRAFT; S3-151119, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3spp.org/ftp/Meetings 3GPP SYNC/SA3/Docs/, retrieved from the internet on 25.01.2015 refers to that Gb supports the signaling for mutual authentication (via the UMTS AKA procedure) although it is not mandatory to use. As previously, it seems straightforward to mandate its use at the UE as the UE is aware that it is a new CIoT device. At the SGSN, there would need to be some method of knowing that mutual authentication is required with this UE. These points are true of all the mandatory new security features. Further, it also discloses that in order to securely negotiate the establishment of a security context, it is necessary to enhance the signaling in order to carry the choice of integrity algorithms and any bidding down protection signaling to the UE as well as support integrity protection. There will also need to be some additional key derivations added to derive ciphering and integrity keys and ideally keys dependent on the algorithm choice.

CN 101123778 A refers to that a SGSN obtains an authentication vector quintet including IK and CK from HLR.

"3rd Generation Partnership Project; Technical Specification Group Service and System Aspects; Study on security aspects of Machine-Type Communications (MTC) and other mobile data applications communications enhancements (Release 12)" 3GPP DRAFT 33.868 33868-C10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, retrieved on 16.06.2014 from URL: http://www.3gpp.org/ftp/tsg_sa/WG3_Security/TSGS3_75_Sapporo/SA#64/specs/, refers to optimized LTE key hierarchy for small data.

### SUMMARY

Embodiments of this application disclose a GPRS system key enhancement method, an SGSN device, UE, an HLR/HSS, and a GPRS system, which can enhance a key in the GPRS system, and enhance security of communication of UE of a first type in a GPRS network.

A first aspect of the embodiments of this application discloses a GPRS system key enhancement method, where the method may include:
receiving, by an SGSN, a request message sent by UE;
acquiring, by the SGSN, an authentication vector from an HLR/HSS, where the authentication vector includes a first ciphering key and a first integrity key;
if the SGSN determines that the UE is UE of a first type, selecting a ciphering algorithm and an integrity algorithm for the UE, and sending the selected ciphering algorithm and the selected integrity algorithm to the UE; and
obtaining, by the SGSN, a second ciphering key and a second integrity key according to the first ciphering key and the first integrity key, where
the second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.

With reference to the first aspect, in a first possible implementation manner, the request message includes an identifier of the UE, and that the SGSN determines that the UE is UE of a first type includes:
sending, by the SGSN, the identifier of the UE to the HLR/HSS, so that the HLR/HSS determines, according to the identifier of the UE, that the UE is UE of the first type, and sends UE type indication information to the SGSN, where the UE type indication information is used to indicate that the UE is UE of the first type; and
receiving, by the SGSN, the UE type indication information sent by the HLR/HSS, and determining that the UE is UE of the first type.

With reference to the first aspect, in a second possible implementation manner, that the SGSN determines that the UE is UE of a first type includes:
if the request message includes UE type indication information, determining, by the SGSN, that the UE is UE of the first type, where the UE type indication information is used to indicate that the UE is UE of the first type.

With reference to any one of the first aspect, or the first or the second possible implementation manner of the first aspect, in a third possible implementation manner, the obtaining, by the SGSN, a second ciphering key and a second integrity key according to the first ciphering key and the first integrity key includes:
computing, by the SGSN, an intermediate key according to the first ciphering key and the first integrity key, computing, by the SGSN, the second ciphering key according to the intermediate key and a ciphering characteristic string, and computing, by the SGSN, the second integrity key according to the intermediate key and an integrity characteristic string; or
computing, by the SGSN, an intermediate key according to the first ciphering key and the first integrity key, computing, by the SGSN, the second ciphering key according to the intermediate key, a first algorithm type indication, and an identifier of the selected ciphering algorithm, and computing, by the SGSN, the second integrity key according to the intermediate key, a second algorithm type indication, and an identifier of the selected integrity algorithm, where values of the first algorithm type indication and the second algorithm type indication are different.

With reference to any one of the first aspect, or the first or the second possible implementation manner of the first aspect, in a fourth possible implementation manner, the computing, by the SGSN, a second ciphering key and a second integrity key according to the first ciphering key and the first integrity key in the authentication vector includes:
computing, by the SGSN, an intermediate key according to the first ciphering key and the first integrity key; and using, by the SGSN, a first preset bit of the intermediate key as the second ciphering key, and using a second preset bit of the intermediate key as the second integrity key; or
computing, by the SGSN, the second ciphering key according to the first ciphering key, a first algorithm type indication, and an identifier of the selected ciphering algorithm, and computing, by the SGSN, the second integrity key according to the first integrity key, a second algorithm type indication, and an identifier of the selected integrity algorithm, where values of the first algorithm type indication and the second algorithm type indication are different; or
using, by the SGSN, the first ciphering key or a preset bit of the first ciphering key as the second ciphering key, and using, by the SGSN, the first integrity key or a preset bit of the first integrity key as the second integrity key.

With reference to any one of the first aspect, or the third or the fourth possible implementation manner of the first aspect, in a fifth possible implementation manner,
the authentication vector is an authentication vector quintet; and
the first ciphering key is a ciphering key CK in the authentication vector quintet, and the first integrity key is an integrity key IK in the authentication vector quintet.

With reference to the fifth possible implementation manner of the first aspect, in a sixth possible implementation manner, the intermediate key is a 64-bit GPRS ciphering key Kc or a 128-bit ciphering key Kc128.

A second aspect of the embodiments of this application discloses a GPRS system key enhancement method, where the method may include:
sending, by UE, a request message to an SGSN;
receiving, by the UE, a ciphering algorithm and an integrity algorithm that are sent by the SGSN; and
acquiring, by the UE, a second ciphering key and a second integrity key according to a first ciphering key and a first integrity key, where
the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

With reference to the second aspect, in a first possible implementation manner, the request message that is sent by the UE to the SGSN includes UE type indication information, where the UE type indication information is used to indicate that the UE is UE of a first type.

With reference to the second aspect, in the first possible implementation manner, the acquiring, by the UE, a second ciphering key and a second integrity key according to a first ciphering key and a first integrity key includes:
computing, by the UE, an intermediate key according to the first ciphering key and the first integrity key, computing, by the UE, the second ciphering key according to the intermediate key and a ciphering characteristic string, and computing, by the UE, the second integrity key according to the intermediate key and an integrity characteristic string; or
computing, by the UE, an intermediate key according to the first ciphering key and the first integrity key, computing, by the UE, the second ciphering key according to the intermediate key, a first algorithm type indication, and an identifier of the ciphering algorithm, and computing, by the UE, the second integrity key according to the intermediate key, a second algorithm type indication, and an identifier of the integrity algorithm, where values of the first algorithm type indication and the second algorithm type indication are different.

With reference to the second aspect or the first possible implementation manner of the second aspect, in a second possible implementation manner, the acquiring, by the UE, a second ciphering key and a second integrity key according to a first ciphering key and a first integrity key includes:
computing, by the UE, an intermediate key according to the first ciphering key and the first integrity key; and using, by the UE, a first preset bit of the intermediate key as the second ciphering key, and using a second preset bit of the intermediate key as the second integrity key.

With reference to the second aspect or the first possible implementation manner of the second aspect, in a third possible implementation manner, the computing, by the UE, a second ciphering key and a second integrity key according to a first ciphering key and a first integrity key includes:
computing, by the UE, an intermediate key according to the first ciphering key and the first integrity key; and using, by the UE, a first preset bit of the intermediate key as the second ciphering key, and using a second preset bit of the intermediate key as the second integrity key; or
computing, by the UE, the second ciphering key according to the first ciphering key, a first algorithm type indication, and an identifier of the ciphering algorithm, and computing, by the UE, the second integrity key according to the first integrity key, an algorithm type indication, and an identifier of the integrity algorithm, where values of the first algorithm type indication and the second algorithm type indication are different; or
using, by the UE, the first ciphering key or a preset bit of the first ciphering key as the second ciphering key, and using, by the UE, the first integrity key or a preset bit of the first integrity key as the second integrity key.

With reference to the second or the third possible implementation manner of the second aspect, in a fourth possible implementation manner, the first ciphering key is a ciphering key CK in an authentication vector quintet, and the first integrity key is an integrity key IK in the authentication vector quintet.

With reference to the fourth possible implementation manner of the second aspect, in a fifth possible implementation manner, the intermediate key is a 64-bit GPRS ciphering key Kc or a 128-bit ciphering key Kc128.

A third aspect of this application discloses a GPRS system key enhancement method, where the method may include:
receiving, by an HLR/HSS, an identifier of user equipment UE that is sent by an SGSN;
determining, by the HLR/HSS according to the identifier of the UE, that the UE is UE of a first type; and
sending, by the HLR/HSS, UE type indication information to the SGSN, where the UE type indication information is used to indicate that the UE is UE of the first type.

A fourth aspect of this application discloses an SGSN device, where the device may include:
a receiving module, configured to receive a request message sent by UE;
an acquiring module, configured to acquire an authentication vector from an HLR/HSS, where the authentication vector includes a first ciphering key and a first integrity key;
a selection module, configured to: when the SGSN determines that the UE is UE of a first type, select a ciphering algorithm and an integrity algorithm for the UE, and send the selected ciphering algorithm and the selected integrity algorithm to the UE; and
an obtaining module, configured to obtain a second ciphering key and a second integrity key according to the first ciphering key and the first integrity key, where
the second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.

With reference to the fourth aspect, in a first possible implementation manner, the request message includes an identifier of the UE, and the SGSN device further includes:
a sending module, configured to send the identifier of the UE to the HLR/HSS, so that the HLR/HSS determines, according to the identifier of the UE, whether the UE is UE of the first type, and sends UE type indication information to the SGSN, where the UE type indication information is used to indicate that the UE is UE of the first type; and
a first determining module, configured to receive the UE type indication information sent by the HLR/HSS, and determine that the UE is UE of the first type.

With reference to the fourth aspect, in a second possible implementation manner, the SGSN device further includes:
a second determining module, configured to: when the request message includes UE type indication information, determine that the UE is UE of the first type, where the UE type indication information is used to indicate that the UE is UE of the first type.

With reference to any one of the fourth aspect, or the first or the second possible implementation manner of the fourth aspect, in a third possible implementation manner, the obtaining module includes: a first computation unit, a second computation unit, and a third computation unit, where
the first computation unit is configured to compute an intermediate key according to the first ciphering key and the first integrity key, the second computation unit is configured to compute the second ciphering key according to the intermediate key and a ciphering characteristic string, and the third computation unit is configured to compute the second integrity key according to the intermediate key and an integrity characteristic string; or
the first computation unit is configured to compute an intermediate key according to the first ciphering key and the first integrity key, the second computation unit is configured to compute the second ciphering key according to the intermediate key, a first algorithm type indication, and an identifier of the selected ciphering algorithm, and the third computation unit is configured to compute the second integrity key according to the intermediate key, a second algorithm type indication, and an identifier of the selected integrity algorithm, where values of the first algorithm type indication and the second algorithm type indication are different.

With reference to any one of the fourth aspect, or the first or the second possible implementation manner of the fourth aspect, in a fourth possible implementation manner,
the obtaining module is specifically configured to compute an intermediate key according to the first ciphering key and the first integrity key; and use a first preset bit of the intermediate key as the second ciphering key, and use a second preset bit of the intermediate key as the second integrity key; or
the obtaining module includes: a fourth computation unit, configured to compute the second ciphering key according to the first ciphering key, a first algorithm type indication, and an identifier of the selected ciphering algorithm, and a fifth computation unit, configured to compute the second integrity key according to the first integrity key, a second algorithm type indication, and an identifier of the selected integrity algorithm, where values of the first algorithm type indication and the second algorithm type indication are different; or
the obtaining module is specifically configured to use the first ciphering key in the authentication vector or a preset bit of the first ciphering key as the second ciphering key, and use the first integrity key in the authentication vector or a preset bit of the first integrity key as the second integrity key.

With reference to the third or the fourth possible implementation manner of the fourth aspect, in a fifth possible implementation manner,
the authentication vector is an authentication vector quintet; and
the first ciphering key is a ciphering key CK in the authentication vector quintet, and the first integrity key is an integrity key IK in the authentication vector quintet.

With reference to the fifth possible implementation manner of the fourth aspect, in a sixth possible implementation manner, the intermediate key is a 64-bit GPRS ciphering key Kc or a 128-bit ciphering key Kc₁₂₈.

A fifth aspect of this application discloses a computer storage medium, where the computer storage medium stores a program, and when the program runs, the steps described in any one of the first aspect or the first to the sixth possible implementation manners of the first aspect are performed.

A sixth aspect of this application provides an SGSN device, where the device may include a receiving apparatus, a sending apparatus, and a processor, where the receiving apparatus, the sending apparatus, and the processor are connected by using a bus;
the receiving apparatus is configured to receive a request message sent by UE;
the processor is configured to:
acquire an authentication vector from an HLR/HSS, where the authentication vector includes a first ciphering key and a first integrity key;
if the SGSN determines that the UE is UE of a first type, select a ciphering algorithm and an integrity algorithm for the UE; and
obtain a second ciphering key and a second integrity key according to the first ciphering key and the first integrity key; and
the sending apparatus is configured to send the selected ciphering algorithm and the selected integrity algorithm to the UE, where
the second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.

With reference to the sixth aspect, in a first possible implementation manner, the request message includes an identifier of the UE;
the sending apparatus is further configured to send the identifier of the UE to the HLR/HSS, so that the HLR/HSS determines, according to the identifier of the UE, whether the UE is UE of the first type, and sends UE type indication information to the SGSN, where the UE type indication information is used to indicate that the UE is UE of the first type; and
that the processor determines that the UE is UE of a first type includes: receiving, by the processor, the UE type indication information sent by the HLR/HSS, and determining that the UE is UE of the first type.

With reference to the sixth aspect, in a second possible implementation manner, that the processor determines that the UE is UE of a first type includes:
if the request message includes UE type indication information, determining, by the processor, that the UE is UE of the first type, where the UE type indication information is used to indicate that the UE is UE of the first type.

With reference to any one of the sixth aspect, or the first or the second possible implementation manner of the sixth aspect, in a third possible implementation manner, that the processor obtains a second ciphering key and a second integrity key according to the first ciphering key and the first integrity key includes:
computing, by the processor, an intermediate key according to the first ciphering key and the first integrity key, computing, by the processor, the second ciphering key according to the intermediate key and a ciphering characteristic string, and computing, by the processor, the second integrity key according to the intermediate key and an integrity characteristic string; or
computing, by the processor, an intermediate key according to the first ciphering key and the first integrity key, computing, by the processor, the second ciphering key according to the intermediate key, a first algorithm type indication, and an identifier of the selected ciphering algorithm, and computing, by the processor, the second integrity key according to the intermediate key, a second algorithm type indication, and an identifier of the selected integrity algorithm, where values of the first algorithm type indication and the second algorithm type indication are different.

With reference to any one of the sixth aspect, or the first or the second possible implementation manner of the sixth aspect, in a fourth possible implementation manner, that the processor obtains a second ciphering key and a second integrity key according to the first ciphering key and the first integrity key includes:
computing, by the processor, an intermediate key according to the first ciphering key and the first integrity key; and using, by the processor, a first preset bit of the intermediate key as the second ciphering key, and using a second preset bit of the intermediate key as the second integrity key; or
computing, by the processor, the second ciphering key according to the first ciphering key in the authentication vector, a first algorithm type indication, and an identifier of the selected ciphering algorithm, and computing, by the processor, the second integrity key according to the first integrity key in the authentication vector, a second algorithm type indication, and an identifier of the selected integrity algorithm, where values of the first algorithm type indication and the second algorithm type indication are different; or
using, by the processor, the first ciphering key or a preset bit of the first ciphering key as the second ciphering key, and using, by the processor, the first integrity key or a preset bit of the first integrity key as the second integrity key.

With reference to the third or the fourth possible implementation manner of the sixth aspect, in a fifth possible implementation manner,
the authentication vector is an authentication vector quintet; and
the first ciphering key is a ciphering key CK in the authentication vector quintet, and the first integrity key is an integrity key IK in the authentication vector quintet.

With reference to the fifth possible implementation manner of the sixth aspect, in a sixth possible implementation manner, the intermediate key is a 64-bit GPRS ciphering key Kc or a 128-bit ciphering key Kc₁₂₈.

A seventh aspect of this application discloses UE, where the UE may include:
a sending module, configured to send a request message to an SGSN;
a receiving module, configured to receive a ciphering algorithm and an integrity algorithm that are sent by the SGSN; and
an acquiring module, configured to acquire a second ciphering key and a second integrity key according to a first ciphering key and a first integrity key, where
the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

With reference to the seventh aspect, in a first possible implementation manner, the request message that is sent by the UE to the SGSN includes UE type indication information, where the UE type indication information is used to indicate that the UE is UE of a first type.

With reference to the seventh aspect or the first possible implementation manner of the seventh aspect, in a second possible implementation manner, the acquiring module includes: a first computation unit, a second computation unit, and a third computation unit, where
the first computation unit is configured to compute an intermediate key according to the first ciphering key and the first integrity key, the second computation unit is configured to compute the second ciphering key according to the intermediate key and a ciphering characteristic string, and the third computation unit is configured to compute the second integrity key according to the intermediate key and an integrity characteristic string; or
the first computation unit is configured to compute an intermediate key according to the first ciphering key and the first integrity key, the second computation unit is configured to compute the second ciphering key according to the intermediate key, a first algorithm type indication, and an identifier of the ciphering algorithm, and the third computation unit is configured to compute the second integrity key according to the intermediate key, a second algorithm type indication, and an identifier of the integrity algorithm, where values of the first algorithm type indication and the second algorithm type indication are different.

With reference to the seventh aspect or the first possible implementation manner of the seventh aspect, in a third possible implementation manner,
the acquiring module is specifically configured to compute an intermediate key according to the first ciphering key and the first integrity key; and use a first preset bit of the intermediate key as the second ciphering key, and use a second preset bit of the intermediate key as the second integrity key; or
the computation module includes: a fourth computation unit, configured to compute the second ciphering key according to the first ciphering key, a first algorithm type indication, and an identifier of the ciphering algorithm, and a fifth computation unit, configured to compute the second integrity key according to the first integrity key, a second algorithm type indication, and an identifier of the integrity algorithm, where values of the first algorithm type indication and the second algorithm type indication are different; or
the acquiring module is specifically configured to use the first ciphering key or a preset bit of the first ciphering key as the second ciphering key, and use the first integrity key or a preset bit of the first integrity key as the second integrity key.

With reference to the second or the third possible implementation manner of the seventh aspect, in a fourth possible implementation manner, the first ciphering key is a ciphering key CK in an authentication vector quintet, and the first integrity key is an integrity key IK in the authentication vector quintet.

With reference to the fourth possible implementation manner of the seventh aspect, in a fifth possible implementation manner, the intermediate key is a 64-bit GPRS ciphering key Kc or a 128-bit ciphering key Kc128.

An eighth aspect of this application discloses a computer storage medium, where the computer storage medium stores a program, and when the program runs, the steps described in any one of the second aspect or the first to the fifth possible implementation manners of the second aspect are performed.

A ninth aspect of this application discloses UE, where the UE may include a sending apparatus, a receiving apparatus, and a processor, where the sending apparatus, the receiving apparatus, and the processor are connected by using a bus;
the sending apparatus is configured to send a request message to an SGSN;
the receiving apparatus is further configured to receive a ciphering algorithm and an integrity algorithm that are sent by the SGSN; and
the processor is configured to acquire a second ciphering key and a second integrity key according to a first ciphering key and a first integrity key, where
the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

With reference to the ninth aspect, in a first possible implementation manner, the request message that is sent by the sending apparatus to the SGSN includes UE type indication information, where the UE type indication information is used to indicate that the UE is UE of a first type.

With reference to the ninth aspect or the first possible implementation manner of the ninth aspect, in a second possible implementation manner, that the processor acquires a second ciphering key and a second integrity key according to a first ciphering key and a first integrity key includes:
computing, by the processor, an intermediate key according to the first ciphering key and the first integrity key, computing, by the processor, the second ciphering key according to the intermediate key and a ciphering characteristic string, and computing, by the processor, the second integrity key according to the intermediate key and an integrity characteristic string; or
computing, by the processor, an intermediate key according to the first ciphering key and the first integrity key, computing, by the processor, the second ciphering key according to the intermediate key, a first algorithm type indication, and an identifier of the ciphering algorithm, and computing, by the processor, the second integrity key according to the intermediate key, a second algorithm type indication, and an identifier of the integrity algorithm, where values of the first algorithm type indication and the second algorithm type indication are different.

With reference to the ninth aspect or the first possible implementation manner of the ninth aspect, in a third possible implementation manner, that the processor acquires a second ciphering key and a second integrity key according to a first ciphering key and a first integrity key includes:
computing, by the processor, an intermediate key according to the first ciphering key and the first integrity key; and using, by the processor, a first preset bit of the intermediate key as the second ciphering key, and using a second preset bit of the intermediate key as the second integrity key; or
computing, by the processor, the second ciphering key according to the first ciphering key, a first algorithm type indication, and an identifier of the ciphering algorithm, and computing, by the processor, the second integrity key according to the first integrity key, a second algorithm type indication, and an identifier of the integrity algorithm, where values of the first algorithm type indication and the second algorithm type indication are different; or
using, by the processor, the first ciphering key or a preset bit of the first ciphering key as the second ciphering key, and using, by the processor, the first integrity key or a preset bit of the first integrity key as the second integrity key.

With reference to the second or the third possible implementation manner of the ninth aspect, in a fourth possible implementation manner, the first ciphering key is a ciphering key CK in an authentication vector quintet, and the first integrity key is an integrity key IK in the authentication vector quintet.

With reference to the fourth possible implementation manner of the ninth aspect, in a fifth possible implementation manner, the intermediate key is a 64-bit GPRS ciphering key Kc or a 128-bit ciphering key Kc₁₂₈.

A tenth aspect of this application discloses an HLR/HSS, where the HLR/HSS may include:
a receiving module, configured to receive an identifier of user equipment UE that is sent by a serving GPRS support node SGSN;
a determining module, configured to determine, according to the identifier of the UE, that the UE is UE of a first type; and
a sending module, configured to send UE type indication information to the SGSN, where the UE type indication information is used to indicate that the UE is UE of the first type.

An eleventh aspect of this application discloses a computer storage medium, where the computer storage medium stores a program, and when the program runs, the steps described in the third aspect of this application are performed.

A twelfth aspect of this application discloses an HLR/HSS, where the HLR/HSS may include a sending apparatus, a receiving apparatus, and a processor, where the sending apparatus, the receiving apparatus, and the processor are connected by using a bus;
the receiving apparatus is configured to receive an identifier of user equipment UE that is sent by a serving GPRS support node SGSN;
the processor is configured to determine, according to the identifier of the UE, that the UE is UE of a first type; and
the sending apparatus is configured to send UE type indication information to the SGSN, where the UE type indication information is used to indicate that the UE is UE of the first type.

A thirteenth aspect of this application discloses a GPRS system, where the GPRS system includes a serving GPRS support node SGSN device, user equipment UE, and a home location register HLR/home subscription system HSS, where
the SGSN device is configured to: receive a request message sent by the UE, acquire an authentication vector from the HLR/HSS, where the authentication vector includes a first ciphering key and a first integrity key, if the SGSN determines that the UE is UE of a first type, select a ciphering algorithm and an integrity algorithm for the UE, send the selected ciphering algorithm and the selected integrity algorithm to the UE, and obtain a second ciphering key and a second integrity key according to the first ciphering key and the first integrity key; and
the UE is configured to: send the request message to the SGSN, receive the ciphering algorithm and the integrity algorithm that are sent by the SGSN, and acquire the second ciphering key and the second integrity key according to the first ciphering key and the first integrity key, where
the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

With reference to the thirteenth aspect, in a first possible implementation manner, the HLR/HSS is configured to:
receive an identifier of the UE that is sent by the SGSN;
determine, according to the identifier of the UE, that the UE is UE of the first type; and
send UE type indication information to the SGSN, where the UE type indication information is used to indicate that the UE is UE of the first type.

In the embodiments of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that after the UE computes the second ciphering key and the second integrity key, both the SGSN and the UE may perform ciphering protection and integrity protection on a communication message between the SGSN and the UE by using the second ciphering key, the second integrity key, and the ciphering algorithm and the integrity algorithm that are selected by the SGSN. This enhances security of communication of UE of the first type in a GPRS network.

### BRIEF DESCRIPTION OF DRAWINGS

To describe the technical solutions in this application more clearly, the following briefly describes the accompanying drawings required for describing the embodiments. Apparently, the accompanying drawings in the following description show merely some embodiments of this application, and persons of ordinary skill in the art may still derive other drawings from these accompanying drawings without creative efforts.
FIG. 1 is a schematic flowchart of an embodiment of a GPRS system key enhancement method according to this application;
FIG. 2 is a schematic flowchart of another embodiment of a GPRS system key enhancement method according to this application;
FIG. 3 is a schematic flowchart of still another embodiment of a GPRS system key enhancement method according to this application;
FIG. 4 is a schematic flowchart of still another embodiment of a GPRS system key enhancement method according to this application;
FIG. 5 is a schematic flowchart of still another embodiment of a GPRS system key enhancement method according to this application;
FIG. 6 is a schematic flowchart of still another embodiment of a GPRS system key enhancement method according to this application;
FIG. 7 is a schematic flowchart of still another embodiment of a GPRS system key enhancement method according to this application;
FIG. 8 is a schematic flowchart of still another embodiment of a GPRS system key enhancement method according to this application;
FIG. 9 is a schematic flowchart of still another embodiment of a GPRS system key enhancement method according to this application;
FIG. 10 is a schematic flowchart of still another embodiment of a GPRS system key enhancement method according to this application;
FIG. 11 is a schematic flowchart of still another embodiment of a GPRS system key enhancement method according to this application;
FIG. 12 is a schematic flowchart of still another embodiment of a GPRS system key enhancement method according to this application;
FIG. 13 is a schematic structural diagram of an embodiment of an SGSN device according to this application;
FIG. 14 is a schematic structural diagram of an embodiment of an obtaining module in an SGSN device according to this application;
FIG. 15 is a schematic structural diagram of another embodiment of an obtaining module in an SGSN device according to this application;
FIG. 16 is a schematic structural diagram of another embodiment of an SGSN device according to this application;
FIG. 17 is a schematic structural diagram of an embodiment of UE according to this application;
FIG. 18 is a schematic structural diagram of an embodiment of an acquiring module in UE according to this application;
FIG. 19 is a schematic structural diagram of another embodiment of an acquiring module in UE according to this application;
FIG. 20 is a schematic structural diagram of another embodiment of UE according to this application;
FIG. 21 is a schematic structural diagram of an embodiment of an HLR/HSS according to this application;
FIG. 22 is a schematic structural diagram of another embodiment of an HLR/HSS according to this application; and
FIG. 23 is a schematic structural diagram of an embodiment of a GPRS system according to this application.

### DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All other embodiments obtained by persons of ordinary skill in the art based on the embodiments of this application without creative efforts shall fall within the protection scope of this application.

This application provides a GPRS system key enhancement method, an SGSN device, UE, an HLR/HSS, and a GPRS system, which may enhance a key between the SGSN and the UE, and provide ciphering protection and integrity protection for communication between the SGSN and the UE. Descriptions are made in the following with reference to the accompanying drawings.

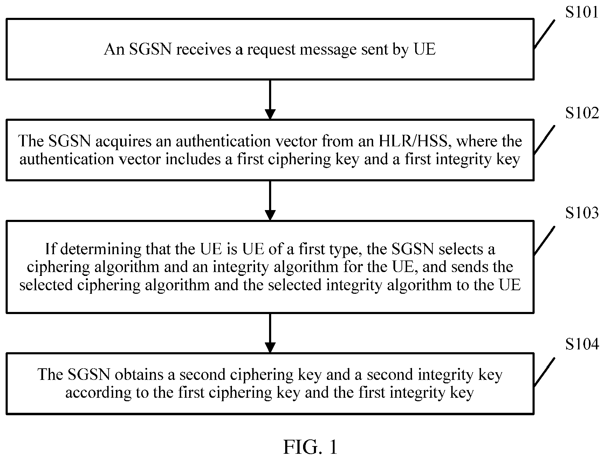

Refer to FIG. 1. FIG. 1 is a schematic flowchart of an embodiment of a GPRS system key enhancement method according to this application. As shown in FIG. 1, the method may include the following steps.

S101. An SGSN receives a request message sent by UE.

In specific implementation, the request message that is sent by the UE to the SGSN (Serving GPRS Support Node, serving GPRS support node) may be an attach request message, a route update message, or another message, for example, a service request message. After receiving the request message sent by the UE, the SGSN may acquire an identifier of the UE that sends the request message. If the UE is UE of a first type, the request message may carry UE type indication information.

In this embodiment of this application, the UE communicates with a network by using a USIM card, and the identifier of the UE may be an IMSI (International Mobile Subscriber Identification Number, international mobile subscriber identity) of the USIM card. UE of the first type may be Internet of Things UE, machine to machine (Machine To Machine, M2M) communication UE, or other high-security UE. The Internet of Things UE refers to user equipment that has an information sensing function and a data transmission function, for example, an audio guide, a personal digital assistant, a barcode collector, a data collection terminal, and a POS terminal that is mainly used for purchase or transfer. The machine to machine communication UE refers to user equipment that has a networking and communication capability and that implements an "intelligence" attribute by using a sensor, a controller, and the like, so as to exchange information with a person, a mobile network, or another machine.

S102. The SGSN acquires an authentication vector from an HLR/HSS, where the authentication vector includes a first ciphering key and a first integrity key.

The home location register (Home Location Register, HLR) is a permanent database of a GPRS system, and stores information required for managing communication of many mobile users, including static information such as identity information, service information, and service authorization that are of a registered mobile user, and dynamic information such as location information of a user. The home subscription system HSS (Home Subscription System, HSS) is evolution and upgrade of the HLR, and is mainly responsible for managing subscription data of a user and location information of a mobile user. Because the HSS and the HLR have a similar function in a network, and much data stored in the HSS is repeatedly stored in the HLR, generally, an HSS and HLR convergence device is presented to the outside. In this embodiment of this application, the HLR/HSS may be an HLR device, an HSS device, or an HLR and HSS convergence device.

In this embodiment of this application, the authentication vector acquired by the SGSN from the HLR/HSS is an authentication vector quintet, which includes a random number RAND, an expected response XRES, an authentication token AUTN, a ciphering key CK, and an integrity key IK.

In this embodiment of this application, the first ciphering key is the ciphering key CK in the authentication vector quintet, and the first integrity key is the integrity key IK in the authentication vector quintet.

S103. If determining that the UE is UE of a first type, the SGSN selects a ciphering algorithm and an integrity algorithm for the UE, and sends the selected ciphering algorithm and the selected integrity algorithm to the UE.

In some feasible implementation manners, the SGSN may send the identifier of the UE to the HLR/HSS. The HLR/HSS determines, according to the identifier of the UE, whether the UE is UE of the first type. If receiving the UE type indication information sent by the HLR/HSS, the SGSN may determine, according to the UE type indication information, that the UE is UE of the first type.

In some other feasible implementation manners, if the request message that is sent by the UE to the SGSN carries the UE type indication information, the SGSN may determine that the UE is UE of the first type.

Optionally, the UE type indication information may indicate, according to existence of a specific information element (Information Element, IE), that the UE is UE of the first type. For example, when the SGSN receives the UE type indication information sent by the HLR/HSS or the UE, if a specific IE exists in the UE type indication information, the SGSN may determine that the UE is UE of the first type, and if the specific IE does not exist in the UE type indication information, the SGSN may determine that the UE is not UE of the first type. Alternatively, the UE type indication information may also indicate, according to a value of a specific IE, that the UE is UE of the first type. For example, when the SGSN receives the UE type indication information sent by the HLR/HSS or the UE, if a value of a specific IE in the UE type indication information is 1, the SGSN may determine that the UE is UE of the first type, and if the value of the specific IE is 0, the SGSN may determine that the UE is not UE of the first type.

In specific implementation, the SGSN may first acquire the authentication vector from the HLR/HSS, and then determine that the UE is UE of the first type, or may first determine that the UE is UE of the first type, and then acquire the authentication vector from the HLR/HSS.

In specific implementation, the UE and the SGSN are separately configured with some ciphering algorithms and integrity algorithms. When sending the request message to the SGSN, the UE sends a ciphering algorithm and an integrity algorithm that are supported by the UE to the SGSN. When receiving the request message of the UE, the SGSN selects a ciphering algorithm supported by the SGSN and an integrity algorithm supported by the SGSN from the ciphering algorithm and the integrity algorithm that are supported by the UE.

In some feasible implementation manners, the ciphering algorithm and the integrity algorithm that are selected by the SGSN may be used along with the first ciphering key and the first integrity key in the authentication vector to compute a second ciphering key and a second integrity key. In addition, ciphering may be performed on a communication message according to the ciphering algorithm selected by the SGSN and the second ciphering key to generate a message ciphertext. A message authentication code MAC may be obtained by means of computation according to the integrity algorithm selected by the SGSN and the second integrity key. The message authentication code MAC may be used to verify integrity of the communication message.

Optionally, when a GPRS network requires a 128-bit second ciphering key, the ciphering algorithm selected by the SGSN may be any one of a 128-EEA1 algorithm, a 128-EEA2 algorithm, or a 128-EEA3 algorithm, and the integrity algorithm selected by the SGSN may be any one of a 128-EIA1 algorithm, a 128-EIA2 algorithm, or a 128-EIA3 algorithm. A SNOW 3G algorithm is used as a core algorithm of the 128-EEA1 algorithm and the 128-EIA1 algorithm. An AES algorithm is used as a core algorithm of the 128-EEA2 algorithm and the 128-EIA2 algorithm. A ZUC algorithm (ZUC algorithm) is used as a core algorithm of the 128-EEA3 algorithm and the 128-EIA3 algorithm.

In specific implementation, when sending the selected ciphering algorithm and the selected integrity algorithm to the UE, the SGSN may further send the random number RAND and the authentication token AUTN in the authentication vector to the UE. The UE may perform authentication on the SGSN side according to the authentication token AUTN, so that the UE side performs authentication on a network side, and may further compute the first ciphering key CK and the first integrity key IK by using f1 to f5 algorithms according to the received random number RAND and the received authentication token AUTN.

To protect a communication message between the SGSN and the UE, both the SGSN and the UE need to use an agreed key (that is, the second ciphering key and the second integrity key) and an agreed algorithm (that is, the ciphering algorithm and the integrity algorithm that are selected by the SGSN) to perform ciphering on the communication message. Therefore, after selecting a ciphering algorithm and an integrity algorithm, the SGSN needs to send the selected ciphering algorithm and the selected integrity algorithm to the UE, so that after computing the second ciphering key and the second integrity key according to the first ciphering key CK and the first integrity key IK, the UE performs ciphering on the communication message by using a ciphering algorithm and an integrity algorithm that are the same as those used by the SGSN, the second ciphering key, and the second integrity key.

S104. The SGSN obtains a second ciphering key and a second integrity key according to the first ciphering key and the first integrity key.

In this embodiment of this application, after selecting the ciphering algorithm and the integrity algorithm, the SGSN may obtain the second ciphering key and the second integrity key according to the first ciphering key and the second ciphering key in the authentication vector. The second ciphering key and the second integrity key are enhanced keys on the basis of the first ciphering key and the first integrity key, where the second ciphering key and the ciphering algorithm selected by the SGSN may be used to perform ciphering protection on a message transmitted between the SGSN and the UE, and the second integrity key and the integrity algorithm selected by the SGSN may be used to perform integrity protection on a message transmitted between the SGSN and the UE.

Optionally, the SGSN may obtain the second ciphering key and the second integrity key only according to the first ciphering key and the first integrity key, or may obtain the second ciphering key and the second integrity key according to the first ciphering key, the first integrity key, the selected ciphering algorithm, and the selected integrity algorithm.

In specific implementation, there is no sequence between step S104 of sending the ciphering algorithm and the integrity algorithm that are selected by the SGSN to the UE and step S105 of computing, by the SGSN, the second ciphering key and the second integrity key according to the first ciphering key and the first integrity key in the authentication vector.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that after the UE computes the second ciphering key and the second integrity key, both the SGSN and the UE may perform ciphering protection and integrity protection on a communication message between the SGSN and the UE by using the second ciphering key, the second integrity key, and the ciphering algorithm and the integrity algorithm that are selected by the SGSN. This enhances security of communication of UE of the first type in a GPRS network.

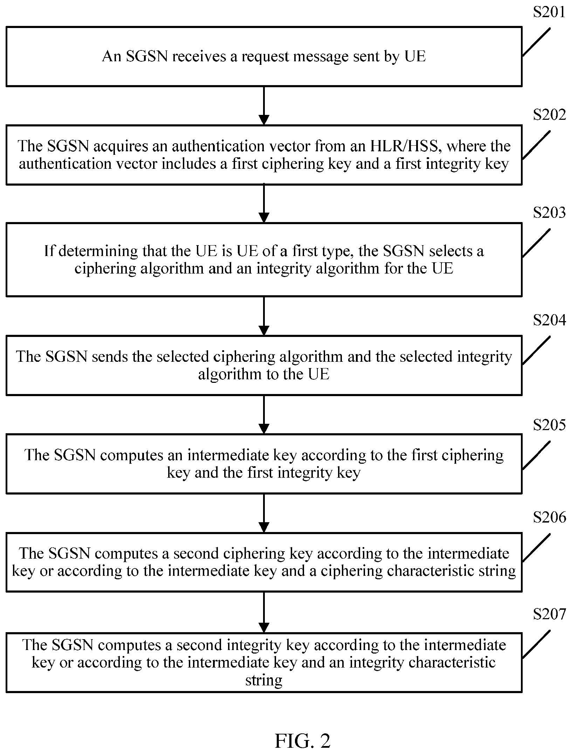

Refer to FIG. 2. FIG. 2 is a schematic flowchart of another embodiment of a GPRS system key enhancement method according to this application. As shown in FIG. 2, the method may include the following steps.

S201. An SGSN receives a request message sent by UE.

S202. The SGSN acquires an authentication vector from an HLR/HSS, where the authentication vector includes a first ciphering key and a first integrity key.

S203. If determining that the UE is UE of a first type, the SGSN selects a ciphering algorithm and an integrity algorithm for the UE.

S204. The SGSN sends the selected ciphering algorithm and the selected integrity algorithm to the UE.

In this embodiment of this application, for specific implementation manners of steps S201 to S204, refer to steps S101 to S103 in the embodiment shown in FIG. 1. Details are not described herein.

S205. The SGSN computes an intermediate key according to the first ciphering key and the first integrity key.

In a feasible implementation manner, an operation may be performed on the first ciphering key and the first integrity key, and then an operation result is used as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the intermediate key may directly use an existing 64-bit GPRS ciphering key Kc or an existing 128-bit ciphering key Kc128, that is, the existing GPRS ciphering key Kc (64-bit) may be directly used as the intermediate key, or the existing Kc128 (128-bit) is directly used as the intermediate key. Both Kc and Kc128 are generated by means of computation according to the CK and the IK.

S206. The SGSN computes a second ciphering key according to the intermediate key or according to the intermediate key and a ciphering characteristic string.

In a feasible implementation manner, the SGSN may use a first preset bit of the intermediate key as the second ciphering key. For example, if a GPRS system requires a 64-bit second ciphering key, the most significant 64 bits of the intermediate key may be directly used as the second ciphering key; if the GPRS system requires a 128-bit second ciphering key, the most significant 128 bits of the intermediate key may be directly used as the second ciphering key. In another optional implementation manner, a required quantity of bits may be randomly selected from the intermediate key as the second ciphering key, which is not limited in this application.

In another feasible implementation manner, the SGSN may compute the second ciphering key according to the intermediate key and the ciphering characteristic string ciphering. In specific implementation, the intermediate key and the ciphering characteristic string ciphering may be used as input parameters of a key derivation function KDF to compute the second ciphering key. For example, the second ciphering key may be obtained by means of computation by using K_{cipher}=KDF(Km, "ciphering"), where "ciphering" is a ciphering characteristic string, and may be generated by means of coding.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ is used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

S207. The SGSN computes a second integrity key according to the intermediate key or according to the intermediate key and an integrity characteristic string.

In a feasible implementation manner, the SGSN may use a second preset bit of the intermediate key as the second integrity key. For example, if a GPRS system requires a 64-bit second integrity key, the least significant 64 bits of the intermediate key may be directly used as the second integrity key; if the GPRS system requires a 128-bit second integrity key, the least significant 128 bits of the intermediate key may be directly used as the second integrity key. In another optional implementation manner, a required quantity of bits may be randomly selected from the intermediate key as the second integrity key, which is not limited in this application.

In another feasible implementation manner, the SGSN may compute the second integrity key according to the intermediate key and the integrity characteristic string integrity. In specific implementation, the intermediate key and the integrity characteristic string integrity may be used as input parameters of a key derivation function KDF to compute the second integrity key. For example, the second integrity key may be obtained by means of computation by using K_{integrity}=KDF(Km, "integrity"), where "integrity" is an integrity characteristic string, and may be generated by means of coding.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the ciphering characteristic string ciphering and the integrity characteristic string integrity are used to make the computed second ciphering key and the computed second integrity key different for easy distinction. Therefore, the integrity characteristic string integrity may be any string inconsistent with the ciphering characteristic string ciphering.

In specific implementation, there is no sequence among step S204 of sending the ciphering algorithm and the integrity algorithm that are selected by the SGSN to the UE, step S205 of computing the intermediate key, step S206 of computing the second ciphering key, and step S207 of computing the second integrity key.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that after the UE computes the second ciphering key and the second integrity key, both the SGSN and the UE may perform ciphering protection and integrity protection on a communication message between the SGSN and the UE by using the second ciphering key, the second integrity key, and the ciphering algorithm and the integrity algorithm that are selected by the SGSN. This enhances security of communication of UE of the first type in a GPRS network.

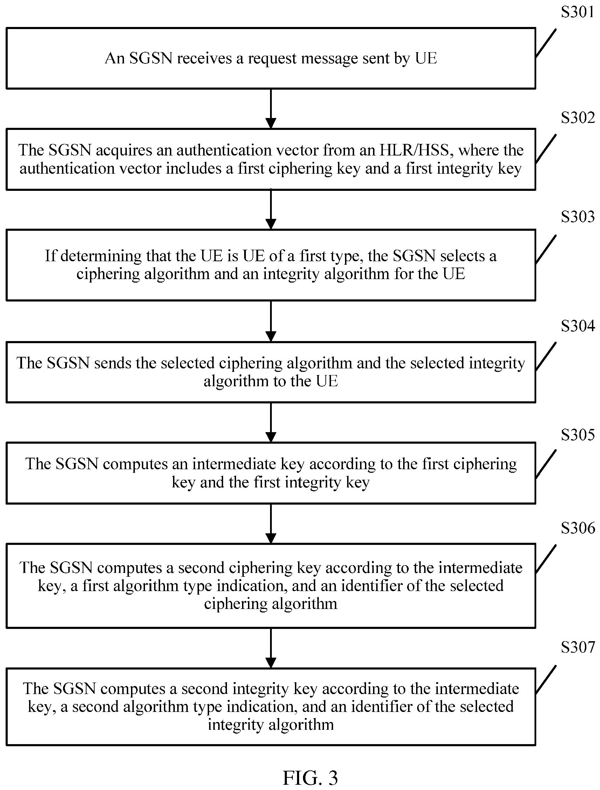

Refer to FIG. 3. FIG. 3 is a schematic flowchart of still another embodiment of a GPRS system key enhancement method according to this application. As shown in FIG. 3, the method may include the following steps.

S301. An SGSN receives a request message sent by UE.

S302. The SGSN acquires an authentication vector from an HLR/HSS, where the authentication vector includes a first ciphering key and a first integrity key.

S303. If determining that the UE is UE of a first type, the SGSN selects a ciphering algorithm and an integrity algorithm for the UE.

S304. The SGSN sends the selected ciphering algorithm and the selected integrity algorithm to the UE.

S305. The SGSN computes an intermediate key according to the first ciphering key and the first integrity key.

In this embodiment of this application, for specific implementation manners of steps S301 to S305, refer to steps S201 to S205 in the embodiment shown in FIG. 2. Details are not described herein.

S306. The SGSN computes a second ciphering key according to the intermediate key, a first algorithm type indication, and an identifier of the selected ciphering algorithm.

In specific implementation, the intermediate key, the first algorithm type indication, and the identifier of the selected ciphering algorithm may be used as input parameters of a key derivation function KDF to compute the second ciphering key. For example, the second ciphering key K_{cipher} may be obtained by means of computation by using K_{cipher}=KDF(Km, algorithm type distinguisher1, ciphering algorithm id), where Km is the intermediate key, algorithm type distinguisher1 is the first algorithm type indication, and ciphering algorithm id is the identifier of the ciphering algorithm selected by the SGSN.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ is used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

S307. The SGSN computes a second integrity key according to the intermediate key, a second algorithm type indication, and an identifier of the selected integrity algorithm.

In specific implementation, the intermediate key, the second algorithm type indication, and the identifier of the selected integrity algorithm may be used as input parameters of a key derivation function KDF to compute the second integrity key. For example, the second integrity key K_{cipher} may be obtained by means of computation by using K_{integrity}=KDF(Km, algorithm type distinguisher2, integrity algorithm id), where Km is the intermediate key, algorithm type distinguisher2 is the second algorithm type indication, and integrity algorithm id is the identifier of the integrity algorithm selected by the SGSN.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. Values of the first algorithm type indication and the second algorithm type indication are different. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of IEs in the first algorithm type indication and the second algorithm type indication. In addition, values of the computed second ciphering key and the computed second integrity key may be made different, so as to distinguish between the second ciphering key and the second integrity key.

In specific implementation, there is no sequence among step S304 of sending the ciphering algorithm and the integrity algorithm that are selected by the SGSN to the UE, step S305 of computing the intermediate key, step S306 of computing the second ciphering key, and step S307 of computing the second integrity key.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that the UE computes the second ciphering key and the second integrity key, and performs ciphering protection and integrity protection on a communication message between the SGSN and the UE by using the second ciphering key and the second integrity key. This enhances security of communication of UE of the first type in a GPRS network.

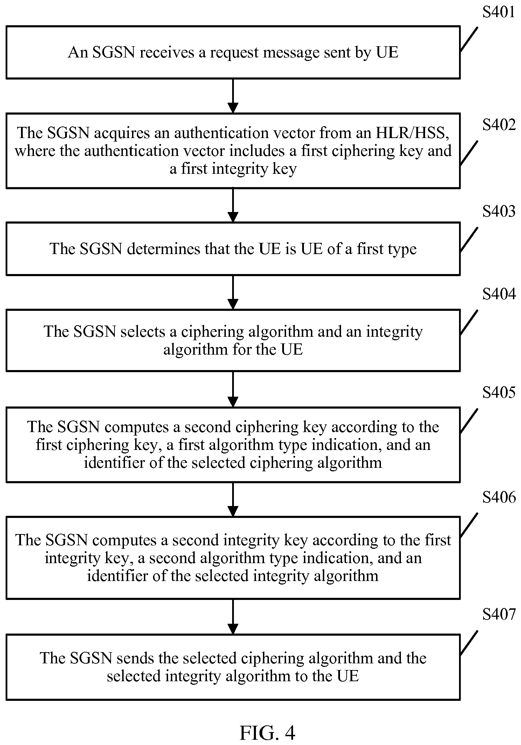

Refer to FIG. 4. FIG. 4 is a schematic flowchart of still another embodiment of a GPRS system key enhancement method according to this application. As shown in FIG. 4, the method may include the following steps.

S401. An SGSN receives a request message sent by UE.

S402. The SGSN acquires an authentication vector from an HLR/HSS, where the authentication vector includes a first ciphering key and a first integrity key.

In this embodiment of this application, for specific implementation manners of steps S401 and S402, refer to steps S101 and S102 in the embodiment shown in FIG. 1. Details are not described herein.

S403. The SGSN determines that the UE is UE of a first type.

In some feasible implementation manners, the SGSN may send an identifier of the UE to the HLR/HSS. The HLR/HSS determines, according to the identifier of the UE, whether the UE is UE of the first type. If receiving UE type indication information sent by the HLR/HSS, the SGSN may determine, according to the UE type indication information, that the UE is UE of the first type.

In some other feasible implementation manners, if the request message that is sent by the UE to the SGSN carries the UE type indication information, the SGSN may determine that the UE is UE of the first type.

Optionally, the SGSN may determine, according to existence or non-existence of a specific information element (Information Element, IE) in the UE type indication information, whether the UE is UE of the first type. For example, when the UE type indication information includes the foregoing specific IE, the SGSN may determine that the UE is UE of the first type; when the UE type indication information does not include the foregoing specific IE, the SGSN may determine that the UE is not UE of the first type. Alternatively, the SGSN may determine, by using data content of an IE in the UE type indication information, whether the UE is UE of the first type. For example, when the data content of the foregoing IE is 1, the SGSN may determine that the UE is UE of the first type; when the data content of the foregoing IE is 0, the SGSN may determine that the UE is not UE of the first type.

In specific implementation, the SGSN may first acquire the authentication vector from the HLR/HSS, and then determine that the UE is UE of the first type, or may first determine that the UE is UE of the first type, and then acquire the authentication vector from the HLR/HSS.

S404. The SGSN selects a ciphering algorithm and an integrity algorithm for the UE.

In specific implementation, the UE and the SGSN are separately configured with some ciphering algorithms and integrity algorithms. When sending the request message to the SGSN, the UE sends a ciphering algorithm and an integrity algorithm that are supported by the UE to the SGSN. When receiving the request message of the UE, the SGSN selects a ciphering algorithm supported by the SGSN and an integrity algorithm supported by the SGSN from the ciphering algorithm and the integrity algorithm that are supported by the UE.

In this embodiment of this application, the ciphering algorithm and the integrity algorithm that are selected by the SGSN may be used along with the first ciphering key and the first integrity key in the authentication vector to compute a second ciphering key and a second integrity key. In addition, ciphering may be performed on a communication message according to the ciphering algorithm selected by the SGSN and the generated second ciphering key to generate a message ciphertext. A message authentication code MAC may be obtained by means of computation according to the integrity algorithm selected by the SGSN and the generated second integrity key. The message authentication code MAC may be used to verify integrity of the communication message.

Optionally, when a GPRS network requires a 128-bit second ciphering key, the ciphering algorithm selected by the SGSN may be any one of a 128-EEA1 algorithm, a 128-EEA2 algorithm, or a 128-EEA3 algorithm, and the integrity algorithm selected by the SGSN may be any one of a 128-EIA1 algorithm, a 128-EIA2 algorithm, or a 128-EIA3 algorithm. A SNOW 3G algorithm is used as a core algorithm of the 128-EEA1 algorithm and the 128-EIA1 algorithm. An AES algorithm is used as a core algorithm of the 128-EEA2 algorithm and the 128-EIA2 algorithm. A ZUC algorithm (ZUC algorithm) is used as a core algorithm of the 128-EEA3 algorithm and the 128-EIA3 algorithm.

S405. The SGSN computes a second ciphering key according to the first ciphering key, a first algorithm type indication, and an identifier of the selected ciphering algorithm.

Specifically, the SGSN may use the first ciphering key, the first algorithm type indication, and the identifier of the selected ciphering algorithm as input parameters of a key derivation function KDF to compute the second ciphering key. For example, K_{cipher}=KDF(CK, algorithm type distinguisher1, ciphering algorithm id), where CK is the first ciphering key, algorithm type distinguisher1 is the first algorithm type indication, and ciphering algorithm id is the identifier of the ciphering algorithm selected by the SGSN.

Optionally, if a GPRS system requires a 64-bit second ciphering key, the most significant 64 bits may be selected from computed K_{cipher} as the second ciphering key; if the GPRS system requires a 128-bit second ciphering key, the most significant 128 bits may be selected from computed K_{cipher} as the second ciphering key. In another feasible implementation manner, a required quantity of bits may be randomly selected from computed K_{cipher} as the second ciphering key, which is not limited in this application.

S406. The SGSN computes a second integrity key according to the first integrity key, a second algorithm type indication, and an identifier of the selected integrity algorithm.

Specifically, the SGSN may use the first integrity key IK, the second algorithm type indication algorithm type distinguisher2, and the identifier of the selected integrity algorithm integrity algorithm id as input parameters of a key derivation function KDF to compute the second integrity key. For example, K_{integrity}=KDF(IK, algorithm type distinguisher2, integrity algorithm id), where IK is the first integrity key, algorithm type distinguisher2 is the second algorithm type indication, and integrity algorithm id is the identifier of the integrity algorithm selected by the SGSN.

Optionally, if a GPRS system requires a 64-bit second integrity key, the most significant 64 bits may be selected from computed K_{integrity} as the second integrity key; if the GPRS system requires a 128-bit second integrity key, the most significant 128 bits may be selected from computed K_{integrity} as the second integrity key. In another feasible implementation manner, a required quantity of bits may be randomly selected from computed K_{integrity} as the second integrity key, which is not limited in this application.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. Values of the first algorithm type indication and the second algorithm type indication are different. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of the first algorithm type indication and the second algorithm type indication. In addition, values of the computed second ciphering key and the computed second integrity key may be made different, so as to distinguish between the second ciphering key and the second integrity key.

S407. The SGSN sends the selected ciphering algorithm and the selected integrity algorithm to the UE.

In specific implementation, when sending the selected ciphering algorithm and the selected integrity algorithm to the UE, the SGSN may further send a random number RAND and an authentication token AUTN in the authentication vector to the UE. The UE may perform authentication on the SGSN side according to the authentication token AUTN, that is, the UE side performs authentication on a network side, and may further compute the first ciphering key CK and the first integrity key IK by using f1 to f5 algorithms according to the received random number RAND and the received authentication token AUTN.

In specific implementation, there is no sequence among step S407 of sending the ciphering algorithm and the integrity algorithm that are selected by the SGSN to the UE, step S405 of computing the second ciphering key, and step S406 of computing the second integrity key.

To protect a communication message between the SGSN and the UE, both the SGSN and the UE need to use an agreed key (that is, the second ciphering key and the second integrity key) and an agreed algorithm (that is, the ciphering algorithm and the integrity algorithm that are selected by the SGSN) to perform ciphering on the communication message. Therefore, after selecting a ciphering algorithm and an integrity algorithm, the SGSN needs to send the selected ciphering algorithm and the selected integrity algorithm to the UE, so that after computing the second ciphering key and the second integrity key according to the first ciphering key CK and the first integrity key IK, the UE performs ciphering on the communication message by using a ciphering algorithm and an integrity algorithm that are the same as those used by the SGSN, the second ciphering key, and the second integrity key.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that the UE computes the second ciphering key and the second integrity key, and performs ciphering protection and integrity protection on a communication message between the SGSN and the UE by using the second ciphering key and the second integrity key. This enhances security of communication of UE of the first type in a GPRS network.

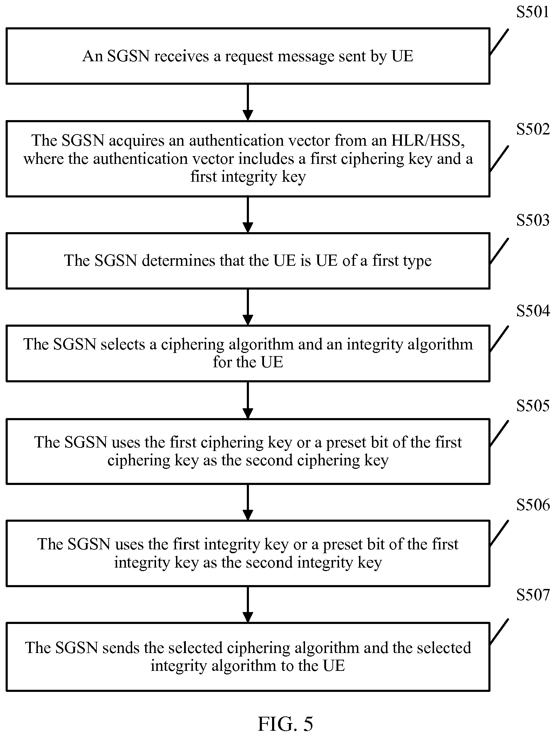

Refer to FIG. 5. FIG. 5 is a schematic flowchart of still another embodiment of a GPRS system key enhancement method according to this application. As shown in FIG. 5, the method may include the following steps.

S501. An SGSN receives a request message sent by UE.

S502. The SGSN acquires an authentication vector from an HLR/HSS, where the authentication vector includes a first ciphering key and a first integrity key.

In this embodiment of this application, for specific implementation manners of steps S501 and S502, refer to steps S101 and S102 in the embodiment shown in FIG. 1. Details are not described herein.

S503. The SGSN determines that the UE is UE of a first type.

S504. The SGSN selects a ciphering algorithm and an integrity algorithm for the UE.

In this embodiment of this application, for specific implementation manners of steps S503 and S504, refer to steps S303 and S304 in the embodiment shown in FIG. 3. Details are not described herein.

S505. The SGSN uses the first ciphering key or a preset bit of the first ciphering key as a second ciphering key.

In some feasible implementation manners, if the first ciphering key is a 128-bit key, and the second ciphering key required by a GPRS system is also a 128-bit key, the first ciphering key may be directly used as the second ciphering key. If the second ciphering key required by the GPRS system is a 64-bit key, 64 preset bits may be selected from the first ciphering key as the second ciphering key. For example, the most significant 64 bits are selected as the second ciphering key.

S506. The SGSN uses the first integrity key or a preset bit of the first integrity key as a second integrity key.

In some feasible implementation manners, if the first integrity key is a 128-bit key, and the second integrity key required by a GPRS system is also a 128-bit key, the first integrity key may be directly used as the second integrity key. If the second integrity key required by the GPRS system is a 64-bit key, 64 preset bits may be selected from the first integrity key as the second integrity key. For example, the most significant 64 bits are selected as the second integrity key.

In this embodiment of this application, ciphering may be performed on a communication message according to the second ciphering key and the ciphering algorithm selected by the SGSN to generate a message ciphertext. A message authentication code MAC may be obtained by means of computation according to the second integrity key and the integrity algorithm selected by the SGSN. The message authentication code MAC may be used to verify integrity of the communication message.

S507. The SGSN sends the selected ciphering algorithm and the selected integrity algorithm to the UE.

In specific implementation, when sending the selected ciphering algorithm and the selected integrity algorithm to the UE, the SGSN may further send a random number RAND and an authentication token AUTN in the authentication vector to the UE. The UE may perform authentication on the SGSN side according to the authentication token AUTN, that is, the UE side performs authentication on a network side, and may further compute the first ciphering key CK and the first integrity key IK by using f1 to f5 algorithms according to the received random number RAND and the received authentication token AUTN.

In specific implementation, there is no sequence among step S507 of sending the ciphering algorithm and the integrity algorithm that are selected by the SGSN to the UE, step S505, and step 506.

To protect a communication message between the SGSN and the UE, both the SGSN and the UE need to use an agreed key (that is, the second ciphering key and the second integrity key) and an agreed algorithm (that is, the ciphering algorithm and the integrity algorithm that are selected by the SGSN) to perform ciphering on the communication message. Therefore, after selecting a ciphering algorithm and an integrity algorithm, the SGSN needs to send the selected ciphering algorithm and the selected integrity algorithm to the UE, so that after computing the second ciphering key and the second integrity key according to the first ciphering key CK and the first integrity key IK, the UE performs ciphering on the communication message by using a ciphering algorithm and an integrity algorithm that are the same as those used by the SGSN, the second ciphering key, and the second integrity key.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that after the UE computes the second ciphering key and the second integrity key, both the SGSN and the UE may perform ciphering protection and integrity protection on a communication message between the SGSN and the UE by using the second ciphering key, the second integrity key, and the ciphering algorithm and the integrity algorithm that are selected by the SGSN. This enhances security of communication of UE of the first type in a GPRS network.

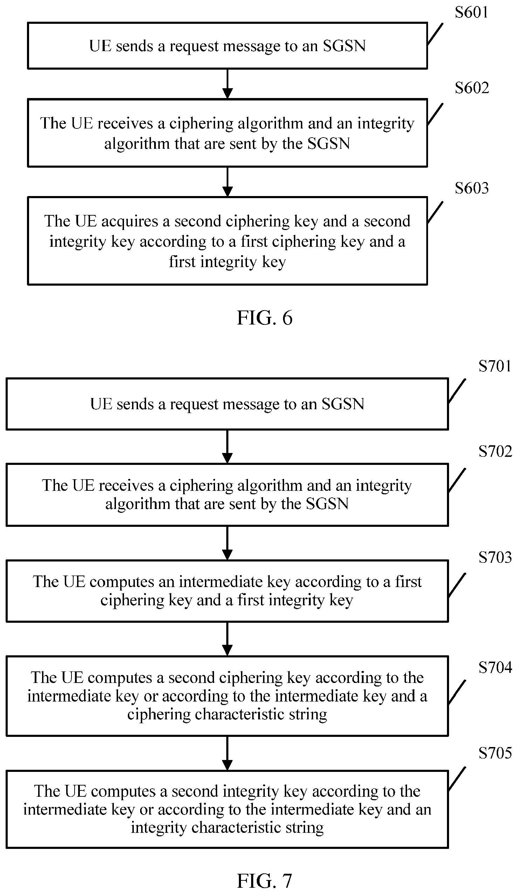

Refer to FIG. 6. FIG. 6 is a schematic flowchart of still another embodiment of a GPRS system key enhancement method according to this application. As shown in FIG. 6, the method may include the following steps.

S601. UE sends a request message to an SGSN.

In specific implementation, the request message that is sent by the UE to the SGSN may be an attach request message, a route update message, or another message, for example, a service request message. After receiving the request message sent by the UE, the SGSN may acquire an identifier of the UE that sends the request message. If the UE is UE of a first type, the request message may carry UE type indication information.

In this embodiment of this application, the UE communicates with a network by using a USIM card, and the identifier of the UE may be an IMSI (International Mobile Subscriber Identification Number, international mobile subscriber identity) of the USIM card. UE of the first type may include Internet of Things UE, machine to machine (Machine To Machine, M2M) communication UE, or other high-security UE. The Internet of Things UE refers to user equipment that has an information sensing function and a data transmission function, for example, an audio guide, a personal digital assistant, a barcode collector, a data collection terminal, and a POS terminal that is mainly used for purchase or transfer. The machine to machine communication UE refers to user equipment that has a networking and communication capability and that implements an "intelligence" attribute by using a sensor, a controller, and the like, so as to exchange information with a person, a mobile network, or another machine.

In this embodiment of this application, an example in which the UE is UE of the first type is used for description. In some feasible implementation manners, the request message that is sent by the UE to the SGSN may include the UE type indication information, so that the SGSN determines, according to the UE type indication information, that the UE is UE of the first type.

Optionally, the UE type indication information may indicate, according to existence of a specific information element (Information Element, IE), that the UE is UE of the first type. For example, when the SGSN receives the UE type indication information sent by the HLR/HSS or the UE, if a specific IE exists in the UE type indication information, the SGSN may determine that the UE is UE of the first type, and if the specific IE does not exist in the UE type indication information, the SGSN may determine that the UE is not UE of the first type. Alternatively, the UE type indication information may also indicate, according to a value of a specific IE, that the UE is UE of the first type. For example, when the SGSN receives the UE type indication information sent by the HLR/HSS or the UE, if a value of a specific IE in the UE type indication information is 1, the SGSN may determine that the UE is UE of the first type, and if the value of the specific IE is 0, the SGSN may determine that the UE is not UE of the first type.

In specific implementation, the UE and the SGSN are separately configured with some ciphering algorithms and integrity algorithms. When sending the request message to the SGSN, the UE sends a ciphering algorithm and an integrity algorithm that are supported by the UE to the SGSN.

S602. The UE receives a ciphering algorithm and an integrity algorithm that are sent by the SGSN.

After the SGSN receives the request message of the UE, if it is determined that the foregoing UE is UE of the first type, the SGSN selects a ciphering algorithm supported by the SGSN and an integrity algorithm supported by the SGSN from the ciphering algorithm and the integrity algorithm that are supported by the UE. The SGSN sends the selected ciphering algorithm and the selected integrity algorithm to the UE, and obtains a second ciphering key and a second integrity key according to a first ciphering key and a first integrity key in an authentication vector.

In specific implementation, when sending the selected ciphering algorithm and the selected integrity algorithm to the UE, the SGSN may further send a random number RAND and an authentication token AUTN in the authentication vector to the UE. The UE may perform authentication on the SGSN side according to the authentication token AUTN, so that the UE side performs authentication on a network side. The UE may further compute the first ciphering key and the first integrity key by using f1 to f5 algorithms according to the received random number RAND and the received authentication token AUTN. The first ciphering key and the first integrity key that are computed by the UE are the same as the first ciphering key and the first integrity key in the authentication vector that is acquired by the SGSN from the HLR/HSS. The authentication vector acquired by the SGSN from the HLR/HSS is an authentication vector quintet, which includes a random number RAND, an expected response XRES, an authentication token AUTN, a ciphering key CK, and an integrity key IK.

In this embodiment of this application, the first ciphering key is the ciphering key CK in the authentication vector quintet, and the first integrity key is the integrity key IK in the authentication vector quintet.

In some feasible implementation manners, the ciphering algorithm and the integrity algorithm that are selected by the SGSN may be used along with the first ciphering key CK and the first integrity key IK to compute the second ciphering key and the second integrity key. In addition, ciphering may be performed on a communication message according to the ciphering algorithm and the generated second ciphering key to generate a message ciphertext. A message authentication code MAC may be obtained by means of computation according to the integrity algorithm and the generated second integrity key. The message authentication code MAC may be used to verify integrity of the communication message.

Optionally, when a GPRS network requires a 128-bit second ciphering key, the ciphering algorithm selected by the SGSN may be any one of a 128-EEA1 algorithm, a 128-EEA2 algorithm, or a 128-EEA3 algorithm, and the integrity algorithm selected by the SGSN may be any one of a 128-EIA1 algorithm, a 128-EIA2 algorithm, or a 128-EIA3 algorithm. A SNOW 3G algorithm is used as a core algorithm of the 128-EEA1 algorithm and the 128-EIA1 algorithm. An AES algorithm is used as a core algorithm of the 128-EEA2 algorithm and the 128-EIA2 algorithm. A ZUC algorithm (ZUC algorithm) is used as a core algorithm of the 128-EEA3 algorithm and the 128-EIA3 algorithm.

S603. The UE acquires a second ciphering key and a second integrity key according to a first ciphering key and a first integrity key.

In this embodiment of this application, the second ciphering key and the second integrity key are enhanced keys on the basis of the first ciphering key and the first integrity key. The second ciphering key and the ciphering algorithm sent by the SGSN are used to perform ciphering protection on a message transmitted between the SGSN and the UE, and the second integrity key and the integrity algorithm sent by the SGSN are used to perform integrity protection on a message transmitted between the SGSN and the UE.

Optionally, the UE may acquire the second ciphering key and the second integrity key only according to the first ciphering key and the first integrity key, or may acquire the second ciphering key and the second integrity key according to the first ciphering key, the first integrity key, and the ciphering algorithm and the integrity algorithm that are sent by the SGSN.

After the second ciphering key and the second integrity key are acquired, to protect a communication message between the SGSN and the UE, both the SGSN and the UE need to use an agreed key (that is, the second ciphering key and the second integrity key) and an agreed algorithm (that is, the ciphering algorithm and the integrity algorithm that are sent by the SGSN) to perform ciphering on the communication message.

In this embodiment of this application, UE sends a request message to an SGSN, receives a ciphering algorithm and an integrity algorithm that are sent by the SGSN, and computes a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

Refer to FIG. 7. FIG. 7 is a schematic flowchart of still another embodiment of a GPRS system key enhancement method according to this application. As shown in FIG. 7, the method may include the following steps.

S701. UE sends a request message to an SGSN.

S702. The UE receives a ciphering algorithm and an integrity algorithm that are sent by the SGSN.

In this embodiment of this application, for specific implementation manners of steps S701 and S702, refer to steps S601 and S602 in the embodiment shown in FIG. 6. Details are not described herein.

S703. The UE computes an intermediate key according to a first ciphering key and a first integrity key.

When receiving the ciphering algorithm and the integrity algorithm that are sent by the SGSN, the UE further receives a random number RAND and an authentication token AUTN that are sent by the SGSN. Before computing the intermediate key, an expected message authentication code XMAC may be first computed according to the authentication token AUTN and the random number RAND, and authentication is performed on the SGSN side by determining whether the expected message authentication code XMAC is the same as a message authentication code MAC in the authentication token AUTN. After authentication on the SGSN side succeeds, the UE computes the first ciphering key CK and the first integrity key IK according to the random number RAND and the authentication token AUTN that are sent by the SGSN, computes a random number response RES, and sends the random number response RES to the SGSN, so that the SGSN side performs authentication on the UE.

In a feasible implementation manner, the UE may perform an operation on the first ciphering key and the first integrity key, and use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the intermediate key may directly use an existing 64-bit GPRS ciphering key Kc or an existing 128-bit ciphering key Kc₁₂₈, that is, the existing GPRS ciphering key Kc (64-bit) may be directly used as the intermediate key, or the existing Kc₁₂₈ (128-bit) is directly used as the intermediate key. Both Kc and Kc₁₂₈ are generated by means of computation according to the CK and the IK.

S704. The UE computes a second ciphering key according to the intermediate key or according to the intermediate key and a ciphering characteristic string.

In a feasible implementation manner, the UE may use a first preset bit of the intermediate key as the second ciphering key. For example, if a GPRS system requires a 64-bit second ciphering key, the most significant 64 bits of the intermediate key may be directly used as the second ciphering key; if the GPRS system requires a 128-bit second ciphering key, the most significant 128 bits of the intermediate key may be directly used as the second ciphering key. In another optional implementation manner, a required quantity of bits may be randomly selected from the intermediate key as the second ciphering key, which is not limited in this application.

In another feasible implementation manner, the UE may compute the second ciphering key according to the intermediate key and the ciphering characteristic string ciphering. In specific implementation, the intermediate key and the ciphering characteristic string ciphering may be used as input parameters of a key derivation function KDF to compute the second ciphering key. For example, the second ciphering key may be obtained by means of computation by using K_{cipher}=KDF(Km, "ciphering"), where "ciphering" is a ciphering characteristic string, and may be generated by means of coding.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ may be used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

S705. The UE computes a second integrity key according to the intermediate key or according to the intermediate key and an integrity characteristic string.

In a feasible implementation manner, the UE may use a second preset bit of the intermediate key as the second integrity key. For example, if a GPRS system requires a 64-bit second integrity key, the least significant 64 bits of the intermediate key may be directly used as the second integrity key; if the GPRS system requires a 128-bit second integrity key, the least significant 128 bits of the intermediate key may be directly used as the second integrity key. Optionally, a required quantity of bits may be randomly selected from the intermediate key as the second integrity key, which is not limited in this application.

In another optional implementation manner, the UE may compute the second integrity key according to the intermediate key and the integrity characteristic string integrity. In specific implementation, the intermediate key and the integrity characteristic string integrity may be used as input parameters of a key derivation function KDF to compute the second integrity key. For example, the second integrity key may be obtained by means of computation by using K_{integrity}=KDF(Km, "integrity"), where "integrity" is an integrity characteristic string, and may be generated by means of coding.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the ciphering characteristic string ciphering and the integrity characteristic string integrity are used to make the computed second ciphering key and the computed second integrity key different for easy distinction. Therefore, the integrity characteristic string integrity may be any string inconsistent with the ciphering characteristic string ciphering.

In this embodiment of this application, UE sends a request message to an SGSN, receives a ciphering algorithm and an integrity algorithm that are sent by the SGSN, and computes a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

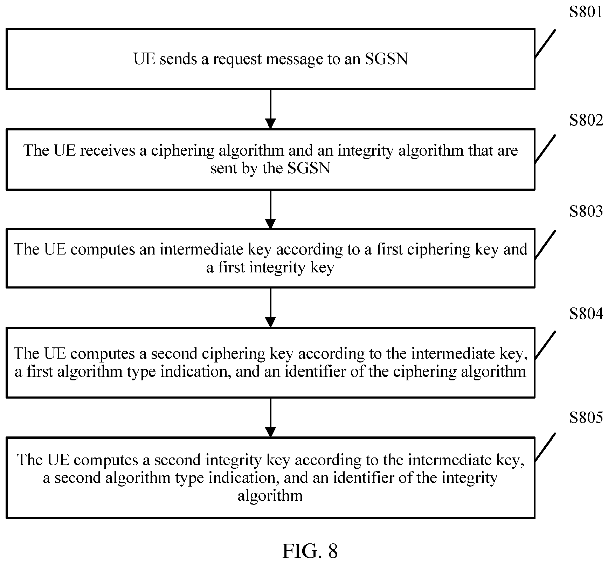

Refer to FIG. 8. FIG. 8 is a schematic flowchart of still another embodiment of a GPRS system key enhancement method according to this application. As shown in FIG. 8, the method may include the following steps.

S801. UE sends a request message to an SGSN.

S802. The UE receives a ciphering algorithm and an integrity algorithm that are sent by the SGSN.

S803. The UE computes an intermediate key according to a first ciphering key and a first integrity key.

In this embodiment of this application, for specific implementation manners of steps S801 to S803, refer to steps S701 to S703 in the embodiment shown in FIG. 7. Details are not described herein.

S804. The UE computes a second ciphering key according to the intermediate key, a first algorithm type indication, and an identifier of the ciphering algorithm.

In specific implementation, the intermediate key, the first algorithm type indication, and the identifier of the ciphering algorithm may be used as input parameters of a key derivation function KDF to compute the second ciphering key. For example, the second ciphering key K_{cipher} may be obtained by means of computation by using K_{cipher}=KDF(Km, algorithm type distinguisher1, ciphering algorithm id), where Km is the intermediate key, algorithm type distinguisher1 is the first algorithm type indication, and ciphering algorithm id is the identifier of the ciphering algorithm selected by the SGSN.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ is used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

S805. The UE computes a second integrity key according to the intermediate key, a second algorithm type indication, and an identifier of the integrity algorithm.

In specific implementation, the intermediate key, the second algorithm type indication, and the identifier of the integrity algorithm may be used as input parameters of a key derivation function KDF to compute the second integrity key. For example, the second integrity key K_{cipher} may be obtained by means of computation by using K_{integrity}=KDF(Km, algorithm type distinguisher2, integrity algorithm id), where Km is the intermediate key, algorithm type distinguisher2 is the second algorithm type indication, and integrity algorithm id is the identifier of the integrity algorithm selected by the SGSN.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. Values of the first algorithm type indication and the second algorithm type indication are different. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of IEs in the first algorithm type indication and the second algorithm type indication. In addition, values of the computed second ciphering key and the computed second integrity key may be made different, so as to distinguish between the second ciphering key and the second integrity key.

In this embodiment of this application, UE sends a request message to an SGSN, receives a ciphering algorithm and an integrity algorithm that are sent by the SGSN, and acquires a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

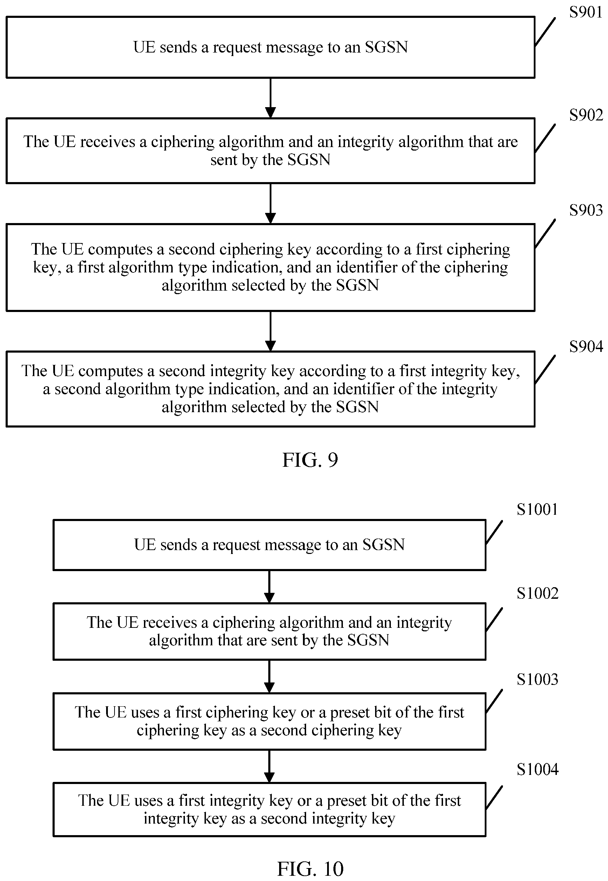

Refer to FIG. 9. FIG. 9 is a schematic flowchart of still another embodiment of a GPRS system key enhancement method according to this application. As shown in FIG. 9, the method may include the following steps.

S901. UE sends a request message to an SGSN.

S902. The UE receives a ciphering algorithm and an integrity algorithm that are sent by the SGSN.

In this embodiment of this application, for specific implementation manners of steps S901 and S902, refer to steps S601 and S602 in the embodiment shown in FIG. 6. Details are not described herein.

S903. The UE computes a second ciphering key according to a first ciphering key, a first algorithm type indication, and an identifier of the ciphering algorithm.

When receiving the ciphering algorithm and the integrity algorithm that are sent by the SGSN, the UE further receives a random number RAND and an authentication token AUTN that are sent by the SGSN. Before computing the second ciphering key or a second integrity key, the UE may first compute an expected message authentication code XMAC according to the authentication token AUTN and the random number RAND, and perform authentication on the SGSN side by determining whether the expected message authentication code XMAC is the same as a message authentication code MAC in the authentication token AUTN. After authentication on the SGSN side succeeds, the UE computes the first ciphering key CK and a first integrity key IK according to the random number RAND and the authentication token AUTN that are sent by the SGSN, computes a random number response RES, and sends the random number response RES to the SGSN, so that the SGSN side performs authentication on the UE.

Specifically, the UE may use the first ciphering key, the first algorithm type indication, and the identifier of the selected ciphering algorithm as input parameters of a key derivation function KDF to compute the second ciphering key. For example, K_{cipher}=KDF(CK, algorithm type distinguisher1, ciphering algorithm id), where CK is the first ciphering key, algorithm type distinguisher1 is the first algorithm type indication, and ciphering algorithm id is the identifier of the ciphering algorithm selected by the SGSN.

Optionally, if a GPRS system requires a 64-bit second ciphering key, the most significant 64 bits may be selected from computed K_{cipher} as the second ciphering key; if the GPRS system requires a 128-bit second ciphering key, the most significant 128 bits may be selected from computed K_{cipher} as the second ciphering key. In another feasible implementation manner, a required quantity of bits may be randomly selected from computed K_{cipher} as the second ciphering key, which is not limited in this application.

S904. The UE computes a second integrity key according to a first integrity key, a second algorithm type indication, and an identifier of the integrity algorithm.

Specifically, the UE may use the first integrity key IK, the second algorithm type indication algorithm type distinguisher2, and the identifier of the selected integrity algorithm integrity algorithm id as input parameters of a key derivation function KDF to compute the second integrity key. For example, K_{integrity}=KDF(IK, algorithm type distinguisher2, integrity algorithm id), where IK is the first integrity key, algorithm type distinguisher2 is the second algorithm type indication, and integrity algorithm id is the identifier of the integrity algorithm selected by the SGSN.

Optionally, if a GPRS system requires a 64-bit second integrity key, the most significant 64 bits may be selected from computed K_{integrity} as the second integrity key; if the GPRS system requires a 128-bit second integrity key, the most significant 128 bits may be selected from computed K_{integrity} as the second integrity key. In another feasible implementation manner, a required quantity of bits may be randomly selected from computed K_{integrity} as the second ciphering key, which is not limited in this application.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. Values of the first algorithm type indication and the second algorithm type indication are different. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of the first algorithm type indication and the second algorithm type indication. In addition, values of the computed second ciphering key and the computed second integrity key may be made different, so as to distinguish between the second ciphering key and the second integrity key.

In this embodiment of this application, UE sends a request message to an SGSN, receives a ciphering algorithm and an integrity algorithm that are sent by the SGSN, and computes a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

Refer to FIG. 10. FIG. 10 is a schematic flowchart of still another embodiment of a GPRS system key enhancement method according to this application. As shown in FIG. 10, the method may include the following steps.

S1001. UE sends a request message to an SGSN.

S1002. The UE receives a ciphering algorithm and an integrity algorithm that are sent by the SGSN.

In this embodiment of this application, for specific implementation manners of steps S1001 and S1002, refer to steps S601 and S602 in the embodiment shown in FIG. 6. Details are not described herein.

S1003. The UE uses a first ciphering key or a preset bit of a first ciphering key as a second ciphering key.

When receiving the ciphering algorithm and the integrity algorithm that are sent by the SGSN, the UE further receives a random number RAND and an authentication token AUTN that are sent by the SGSN. Before computing the second ciphering key or a second integrity key, the UE may first compute an expected message authentication code XMAC according to the authentication token AUTN and the random number RAND, and perform authentication on the SGSN side by determining whether the expected message authentication code XMAC is the same as a message authentication code MAC in the authentication token AUTN. After authentication on the SGSN side succeeds, the UE computes the first ciphering key CK and a first integrity key IK according to the random number RAND and the authentication token AUTN that are sent by the SGSN, computes a random number response RES, and sends the random number response RES to the SGSN, so that the SGSN side performs authentication on the UE.

In some feasible implementation manners, if the first ciphering key is a 128-bit key, and the second ciphering key required by a GPRS system is also a 128-bit key, the first ciphering key may be directly used as the second ciphering key. If the second ciphering key required by the GPRS system is a 64-bit key, 64 preset bits may be selected from the first ciphering key as the second ciphering key. For example, the most significant 64 bits are selected as the second ciphering key.

S1004. The UE uses a first integrity key or a preset bit of a first integrity key as a second integrity key.

In some feasible implementation manners, if the first integrity key is a 128-bit key, and the second integrity key required by a GPRS system is also a 128-bit key, the first integrity key may be directly used as the second integrity key. If the second integrity key required by the GPRS system is a 64-bit key, 64 preset bits may be selected from the first integrity key as the second integrity key. For example, the most significant 64 bits are selected as the second integrity key.

In this embodiment of this application, UE sends a request message to an SGSN, receives a ciphering algorithm and an integrity algorithm that are sent by the SGSN, and computes a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

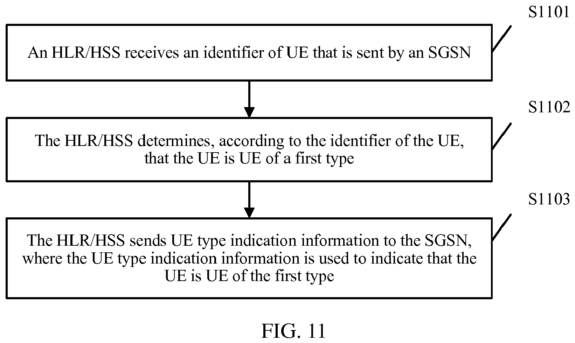

Refer to FIG. 11. FIG. 11 is a schematic flowchart of still another embodiment of a GPRS system key enhancement method according to this application. As shown in FIG. 11, the method may include the following steps.

S1101. An HLR/HSS receives an identifier of UE that is sent by an SGSN.

The home location register (Home Location Register, HLR) is a permanent database of a GPRS system, and stores information required for managing communication of many mobile users, including static information such as identity information, service information, and service authorization that are of a registered mobile user, and dynamic information such as location information of a user. The home subscription system HSS (Home Subscription System, HSS) is evolution and upgrade of the HLR, and is mainly responsible for managing subscription data of a user and location information of a mobile user. Because the HSS and the HLR have a similar function in a network, and much data stored in the HSS is repeatedly stored in the HLR, generally, an HSS and HLR convergence device is presented to the outside. In this embodiment of this application, the HLR/HSS may be an HLR device, an HSS device, or an HLR and HSS convergence device.

In this embodiment of this application, the UE communicates with a network by using a USIM card, and the identifier of the UE may be an IMSI (International Mobile Subscriber Identification Number, international mobile subscriber identity) of the USIM card.

S1102. The HLR/HSS determines, according to the identifier of the UE, that the UE is UE of a first type.

In specific implementation, the HLR/HSS stores various information of many UEs. After receiving the identifier of the UE that is sent by the SGSN, the HLR/HSS may query information about the UE, so as to determine whether the UE is UE of the first type. In this embodiment of this application, an example in which the UE is UE of the first type is used for description.

In this embodiment of this application, UE of the first type may include Internet of Things UE, machine to machine (Machine To Machine, M2M) communication UE, or other high-security UE. The Internet of Things UE refers to user equipment that has an information sensing function and a data transmission function, for example, an audio guide, a personal digital assistant, a barcode collector, a data collection terminal, and a POS terminal that is mainly used for purchase or transfer. The machine to machine communication UE refers to user equipment that has a networking and communication capability and that implements an "intelligence" attribute by using a sensor, a controller, and the like, so as to exchange information with a person, a mobile network, or another machine.

S1103. The HLR/HSS sends UE type indication information to the SGSN, where the UE type indication information is used to indicate that the UE is UE of the first type.

Optionally, the UE type indication information may indicate, according to existence of a specific information element (Information Element, IE), that the UE is UE of the first type. For example, when the SGSN receives the UE type indication information sent by the HLR/HSS or the UE, if a specific IE exists in the UE type indication information, the SGSN may determine that the UE is UE of the first type, and if the specific IE does not exist in the UE type indication information, the SGSN may determine that the UE is not UE of the first type. Alternatively, the UE type indication information may also indicate, according to a value of a specific IE, that the UE is UE of the first type. For example, when the SGSN receives the UE type indication information sent by the HLR/HSS or the UE, if a value of a specific IE in the UE type indication information is 1, the SGSN may determine that the UE is UE of the first type, and if the value of the specific IE is 0, the SGSN may determine that the UE is not UE of the first type.

In this embodiment of this application, the HLR/HSS may further send an authentication vector to the SGSN, where the authentication vector includes a first ciphering key and a first integrity key.

In some feasible implementation manners, the foregoing authentication vector may be an authentication vector quintet, which includes a random number RAND, an expected response XRES, an authentication token AUTN, a ciphering key CK, and an integrity key IK. The first ciphering key is the ciphering key CK in the authentication vector quintet, and the first integrity key is the integrity key IK in the authentication vector quintet.

In this embodiment of this application, an HLR/HSS may receive an identifier of UE that is sent by an SGSN, determine, according to the identifier of the UE, that the UE is UE of a first type, and send UE type indication information to the SGSN so as to indicate that the UE is UE of the first type, so that key enhancement processing for the UE of the first type may be performed between the SGSN and the UE of the first type, and security of communication of the UE of the first type in a GPRS network is enhanced.

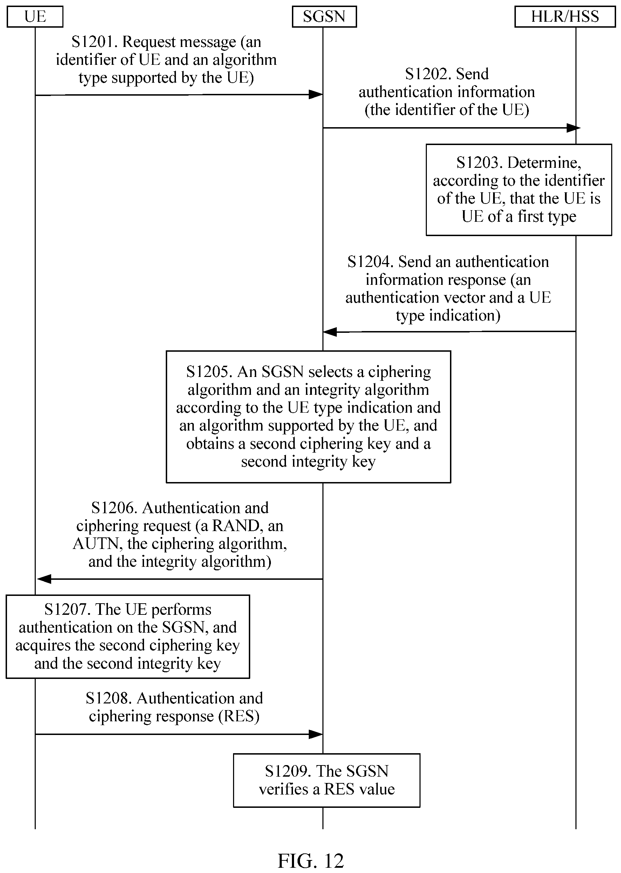

Refer to FIG. 12. FIG. 12 is a schematic flowchart of still another embodiment of a GPRS system key enhancement method according to this application. As shown in FIG. 12, the method may include the following steps.

51201. UE sends a request message to an SGSN.

S1202. The SGSN sends an identifier of the UE to an HLR/HSS.

S1203. The HLR/HSS determines, according to the identifier of the UE, that the UE is UE of a first type.

S1204. The HLR/HSS sends UE type indication information and an authentication vector to the SGSN.

S1205. The SGSN selects a ciphering algorithm and an integrity algorithm according to the UE type indication information and an algorithm supported by the UE, and obtains a second ciphering key and a second integrity key.

S1206. The SGSN sends an authentication and ciphering request to the UE, which includes the ciphering algorithm and the integrity algorithm that are selected by the SGSN, a random number RAND, and an authentication token AUTN.

S1207. The UE performs authentication on the SGSN side, and after the authentication succeeds, acquires the second ciphering key and the second integrity key.

S1208. The UE sends an authentication and ciphering response RES to the SGSN.

S1209. The SGSN verifies a RES value, and performs authentication on the UE side.

In this embodiment of this application, UE sends a request message to an SGSN. After determining that the UE is UE of a first type, the SGSN selects a ciphering algorithm and an integrity algorithm. Both the UE and the SGSN compute an enhanced second ciphering key and an enhanced second integrity key according to a first ciphering key and a first integrity key, and perform ciphering protection and integrity protection on a communication message between the UE and the SGSN by using the second ciphering key, the second integrity key, and the ciphering algorithm and the integrity algorithm that are selected by the SGSN. This enhances security of communication of UE of the first type in a GPRS network.

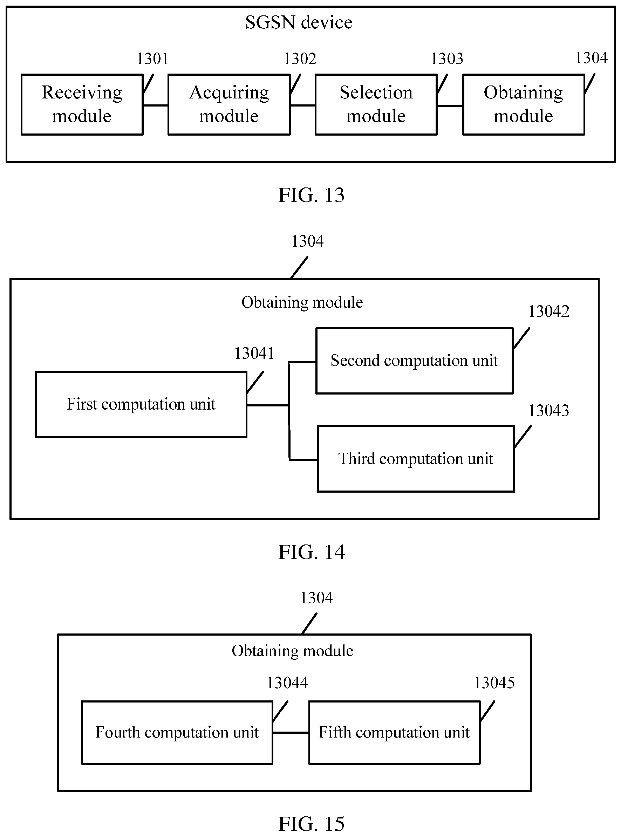

Refer to FIG. 13. FIG. 13 is a schematic structural diagram of an embodiment of an SGSN device according to this application. As shown in FIG. 13, the SGSN device may include a receiving module 1301, an acquiring module 1302, a selection module 1303, and an obtaining module 1304.

The receiving module 1301 is configured to receive a request message sent by UE.

In specific implementation, the request message that is sent by the UE to the SGSN may be an attach request message, a route update message, or another message, for example, a service request message. After receiving the request message sent by the UE, the SGSN may acquire an identifier of the UE that sends the request message. If the UE is UE of a first type, the request message may carry UE type indication information.

In this embodiment of this application, the UE communicates with a network by using a USIM card, and the identifier of the UE may be an IMSI (International Mobile Subscriber Identification Number, international mobile subscriber identity) of the USIM card. UE of the first type may include Internet of Things UE, machine to machine (Machine To Machine, M2M) communication UE, or other high-security UE. The Internet of Things UE refers to user equipment that has an information sensing function and a data transmission function, for example, an audio guide, a personal digital assistant, a barcode collector, a data collection terminal, and a POS terminal that is mainly used for purchase or transfer. The machine to machine communication UE refers to user equipment that has a networking and communication capability and that implements an "intelligence" attribute by using a sensor, a controller, and the like, so as to exchange information with a person, a mobile network, or another machine.

The acquiring module 1302 is configured to acquire an authentication vector from an HLR/HSS, where the authentication vector includes a first ciphering key and a first integrity key.

The home location register (Home Location Register, HLR) is a permanent database of a GPRS system, and stores information required for managing communication of many mobile users, including static information such as identity information, service information, and service authorization that are of a registered mobile user, and dynamic information such as location information of a user. The home subscription system HSS (Home Subscription System, HSS) is evolution and upgrade of the HLR, and is mainly responsible for managing subscription data of a user and location information of a mobile user. Because the HSS and the HLR have a similar function in a network, and much data stored in the HSS is repeatedly stored in the HLR, generally, an HSS and HLR convergence device is presented to the outside. In this embodiment of this application, the HLR/HSS may be an HLR device, an HSS device, or an HLR and HSS convergence device.

In this embodiment of this application, the authentication vector acquired by the SGSN from the HLR/HSS is an authentication vector quintet, which includes a random number RAND, an expected response XRES, an authentication token AUTN, a ciphering key CK, and an integrity key IK.

In this embodiment of this application, the first ciphering key is the ciphering key CK in the authentication vector quintet, and the first integrity key is the integrity key IK in the authentication vector quintet.

The selection module 1303 is configured to: when the SGSN determines that the UE is UE of a first type, select a ciphering algorithm and an integrity algorithm for the UE, and send the selected ciphering algorithm and the selected integrity algorithm to the UE.

In some feasible implementation manners, the SGSN device may further include a sending module and a first determining module (not shown in the figure).

The sending module may be configured to send the identifier of the UE to the HLR/HSS, so that the HLR/HSS determines, according to the identifier of the UE, whether the UE is UE of the first type, and sends UE type indication information to the SGSN, where the UE type indication information is used to indicate that the UE is UE of the first type.

The first determining module may be configured to receive the UE type indication information sent by the HLR/HSS, and determine that the UE is UE of the first type.

In some feasible implementation manners, the SGSN device may further include a second determining module (not shown in the figure), and the second determining module may be configured to: when the request message includes the UE type indication information, determine that the UE is UE of the first type, where the UE type indication information is used to indicate that the UE is UE of the first type.

In some feasible implementation manners, the SGSN device may also include a sending module, a first determining module, and a second determining module.

Optionally, the UE type indication information may indicate, according to existence of a specific information element (Information Element, IE), that the UE is UE of the first type. For example, when the SGSN receives the UE type indication information sent by the HLR/HSS or the UE, if a specific IE exists in the UE type indication information, the SGSN may determine that the UE is UE of the first type, and if the specific IE does not exist in the UE type indication information, the SGSN may determine that the UE is not UE of the first type. Alternatively, the UE type indication information may also indicate, according to a value of a specific IE, that the UE is UE of the first type. For example, when the SGSN receives the UE type indication information sent by the HLR/HSS or the UE, if a value of a specific IE in the UE type indication information is 1, the SGSN may determine that the UE is UE of the first type, and if the value of the specific IE is 0, the SGSN may determine that the UE is not UE of the first type.

In specific implementation, the SGSN may first acquire the authentication vector from the HLR/HSS, and then determine that the UE is UE of the first type, or the SGSN may first determine that the UE is UE of the first type, and then acquire the authentication vector from the HLR/HSS.

In specific implementation, the UE and the SGSN are separately configured with some ciphering algorithms and integrity algorithms. When sending the request message to the SGSN, the UE sends a ciphering algorithm and an integrity algorithm that are supported by the UE to the SGSN. When receiving the request message of the UE, the SGSN selects a ciphering algorithm supported by the SGSN and an integrity algorithm supported by the SGSN from the ciphering algorithm and the integrity algorithm that are supported by the UE.

In some feasible implementation manners, the ciphering algorithm and the integrity algorithm that are selected by the SGSN may be used along with the first ciphering key and the first integrity key in the authentication vector to compute a second ciphering key and a second integrity key. In addition, ciphering may be performed on a communication message according to the ciphering algorithm selected by the SGSN and the second ciphering key to generate a message ciphertext. A message authentication code MAC may be obtained by means of computation according to the integrity algorithm selected by the SGSN and the second integrity key. The message authentication code MAC may be used to verify integrity of the communication message.

Optionally, when a GPRS network requires a 128-bit second ciphering key, the ciphering algorithm selected by the SGSN may be any one of a 128-EEA1 algorithm, a 128-EEA2 algorithm, or a 128-EEA3 algorithm, and the integrity algorithm selected by the SGSN may be any one of a 128-EIA1 algorithm, a 128-EIA2 algorithm, or a 128-EIA3 algorithm. A SNOW 3G algorithm is used as a core algorithm of the 128-EEA1 algorithm and the 128-EIA1 algorithm. An AES algorithm is used as a core algorithm of the 128-EEA2 algorithm and the 128-EIA2 algorithm. A ZUC algorithm (ZUC algorithm) is used as a core algorithm of the 128-EEA3 algorithm and the 128-EIA3 algorithm.

In specific implementation, when sending the selected ciphering algorithm and the selected integrity algorithm to the UE, the SGSN may further send the random number RAND and the authentication token AUTN in the authentication vector to the UE. The UE may perform authentication on the SGSN side according to the authentication token AUTN, so that the UE side performs authentication on a network side, and may further compute the first ciphering key CK and the first integrity key IK by using f1 to f5 algorithms according to the received random number RAND and the received authentication token AUTN.

To protect a communication message between the SGSN and the UE, both the SGSN and the UE need to use an agreed key (that is, the second ciphering key and the second integrity key) and an agreed algorithm (that is, the ciphering algorithm and the integrity algorithm that are selected by the SGSN) to perform ciphering on the communication message. Therefore, after selecting a ciphering algorithm and an integrity algorithm, the SGSN needs to send the selected ciphering algorithm and the selected integrity algorithm to the UE, so that after computing the second ciphering key and the second integrity key according to the first ciphering key CK and the first integrity key IK, the UE performs ciphering on the communication message by using a ciphering algorithm and an integrity algorithm that are the same as those used by the SGSN, the second ciphering key, and the second integrity key.

The obtaining module 1304 is configured to obtain the second ciphering key and the second integrity key according to the first ciphering key and the first integrity key.

In this embodiment of this application, after selecting the ciphering algorithm and the integrity algorithm, the SGSN computes the second ciphering key and the second integrity key according to the first ciphering key and the second ciphering key in the authentication vector, where the first ciphering key is the ciphering key CK in the authentication vector quintet, and the first integrity key is the integrity key IK in the authentication vector quintet. The second ciphering key and the second integrity key are enhanced keys on the basis of the first ciphering key and the first integrity key, where the second ciphering key and the ciphering algorithm selected by the SGSN may be used to perform ciphering protection on a message transmitted between the SGSN and the UE, and the second integrity key and the integrity algorithm selected by the SGSN may be used to perform integrity protection on a message transmitted between the SGSN and the UE.

Optionally, the SGSN may compute the second ciphering key and the second integrity key only according to the first ciphering key and the first integrity key, or may compute the second ciphering key and the second integrity key according to the first ciphering key, the first integrity key, the selected ciphering algorithm, and the selected integrity algorithm.

In specific implementation, there may be no sequence between the sending, by the selection module 1303, the ciphering algorithm and the integrity algorithm that are selected by the SGSN to the UE and the obtaining, by the obtaining module 1304, the second ciphering key and the second integrity key according to the first ciphering key and the first integrity key in the authentication vector.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that after the UE computes the second ciphering key and the second integrity key, both the SGSN and the UE may perform ciphering protection and integrity protection on a communication message between the SGSN and the UE by using the second ciphering key, the second integrity key, and the ciphering algorithm and the integrity algorithm that are selected by the SGSN. This enhances security of communication of UE of the first type in a GPRS network.

The following describes, in detail, a structure and a function of the obtaining module 1304 shown in FIG. 13 with reference to FIG. 14 and FIG. 15.

In some feasible implementation manners, as shown in FIG. 14, the obtaining module 1304 may include a first computation unit 13041, a second computation unit 13042, and a third computation unit 13043.

The first computation unit 13041 is configured to compute an intermediate key according to the first ciphering key and the first integrity key.

In a feasible implementation manner, the first computation unit 13041 may perform an operation on the first ciphering key and the first integrity key, and then use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the intermediate key may directly use an existing 64-bit GPRS ciphering key Kc or an existing 128-bit ciphering key Kc₁₂₈, that is, the first computation unit 13041 may directly use the existing GPRS ciphering key Kc (64-bit) as the intermediate key, or directly use the existing Kc₁₂₈ (128-bit) as the intermediate key. Both Kc and Kc₁₂₈ are generated by means of computation according to the CK and the IK.

The second computation unit 13042 is configured to compute the second ciphering key according to the intermediate key and a ciphering characteristic string.

In specific implementation, the intermediate key and the ciphering characteristic string ciphering may be used as input parameters of a key derivation function KDF to compute the second ciphering key. For example, the second ciphering key may be obtained by means of computation by using K_{cipher}=KDF(Km, "ciphering"), where "ciphering" is a ciphering characteristic string, and may be generated by means of coding.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ is used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

The third computation unit 13043 is configured to compute the second integrity key according to the intermediate key and an integrity characteristic string.

In specific implementation, the intermediate key and the integrity characteristic string integrity may be used as input parameters of a key derivation function KDF to compute the second integrity key. For example, the second integrity key may be obtained by means of computation by using K_{integrity}=KDF(Km, "integrity"), where "integrity" is an integrity characteristic string, and may be generated by means of coding.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF and K_{integrity} obtained by means of computation according to the preset 128 bits of the Km is used as the second integrity key; or the computed intermediate key Km may be directly used as one of input parameters of a key derivation function KDF, and preset 128 bits (for example, the most significant 128 bits) are intercepted from computed K_{integrity} as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the ciphering characteristic string ciphering and the integrity characteristic string integrity are used to make the computed second ciphering key and the computed second integrity key different for easy distinction. Therefore, the integrity characteristic string integrity may be any string inconsistent with the ciphering characteristic string ciphering.

In some feasible implementation manners, as shown in FIG. 14, the obtaining module 1304 may include a first computation unit 13041, a second computation unit 13042, and a third computation unit 13043.

The first computation unit 13041 is configured to compute an intermediate key according to the first ciphering key and the first integrity key.

In a feasible implementation manner, the first computation unit 13041 may perform an operation on the first ciphering key and the first integrity key, and then use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the first computation unit 13041 may directly use an existing GPRS ciphering key Kc (64-bit) as the intermediate key, or directly use an existing Kc₁₂₈ (128-bit) as the intermediate key. Both Kc and Kc₁₂₈ are generated by means of computation according to the CK and the IK.

The second computation unit 13042 is configured to compute the second ciphering key according to the intermediate key, a first algorithm type indication, and an identifier of the selected ciphering algorithm.

In specific implementation, the second computation unit 13042 may use the intermediate key, the first algorithm type indication, and the identifier of the selected ciphering algorithm as input parameters of a key derivation function KDF to compute the second ciphering key. For example, the second ciphering key K_{cipher} may be obtained by means of computation by using K_{cipher}=KDF(Km, algorithm type distinguisher1, ciphering algorithm id), where Km is the intermediate key, algorithm type distinguisher1 is the first algorithm type indication, and ciphering algorithm id is the identifier of the ciphering algorithm selected by the SGSN.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ is used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

The third computation unit 13043 is configured to compute the second integrity key according to the intermediate key, a second algorithm type indication, and an identifier of the selected integrity algorithm, where values of the first algorithm type indication and the second algorithm type indication are different.

In specific implementation, the third computation unit 13043 may use the intermediate key, the second algorithm type indication, and the identifier of the selected integrity algorithm as input parameters of a key derivation function KDF to compute the second integrity key. For example, the second integrity key K_{cipher} may be obtained by means of computation by using K_{integrity}=KDF(Km, algorithm type distinguisher2, integrity algorithm id), where Km is the intermediate key, algorithm type distinguisher2 is the second algorithm type indication, and integrity algorithm id is the identifier of the integrity algorithm selected by the SGSN.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of IEs in the first algorithm type indication and the second algorithm type indication. In addition, values of the computed second ciphering key and the computed second integrity key may be made different, so as to distinguish between the second ciphering key and the second integrity key.

In some feasible implementation manners, as shown in FIG. 15, the obtaining module 1304 may include a fourth computation unit 13044 and a fifth computation unit 13045.

The fourth computation unit 13044 is configured to compute the second ciphering key according to the first ciphering key, a first algorithm type indication, and an identifier of the selected ciphering algorithm.

Specifically, the fourth computation unit 13044 may use the first ciphering key, the first algorithm type indication, and the identifier of the selected ciphering algorithm as input parameters of a key derivation function KDF to compute the second ciphering key. For example, K_{cipher}=KDF(CK, algorithm type distinguisher1, ciphering algorithm id), where CK is the first ciphering key, algorithm type distinguisher1 is the first algorithm type indication, and ciphering algorithm id is the identifier of the ciphering algorithm selected by the SGSN.

Optionally, if a GPRS system requires a 64-bit second ciphering key, the most significant 64 bits may be selected from computed K_{cipher} as the second ciphering key; if the GPRS system requires a 128-bit second ciphering key, the most significant 128 bits may be selected from computed K_{cipher} as the second ciphering key. In another feasible implementation manner, a required quantity of bits may be randomly selected from computed K_{cipher} as the second ciphering key, which is not limited in this application.

The fifth computation unit 13045 computes the second integrity key according to the first integrity key in the authentication vector, a second algorithm type indication, and an identifier of the selected integrity algorithm.

Specifically, the fifth computation unit 13045 may use the first integrity key, the second algorithm type indication, and the identifier of the selected integrity algorithm as input parameters of a key derivation function KDF to compute the second integrity key. For example, K_{integrity}=KDF(IK, algorithm type distinguisher2, integrity algorithm id), where IK is the first integrity key, algorithm type distinguisher2 is the second algorithm type indication, and integrity algorithm id is the identifier of the integrity algorithm selected by the SGSN.

Optionally, if a GPRS system requires a 64-bit second integrity key, the most significant 64 bits may be selected from computed K_{integrity} as the second integrity key; if the GPRS system requires a 128-bit second integrity key, the most significant 128 bits may be selected from computed K_{integrity} as the second integrity key. In another feasible implementation manner, a required quantity of bits may be randomly selected from computed K_{integrity} as the second integrity key, which is not limited in this application.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. Values of the first algorithm type indication and the second algorithm type indication are different. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of the first algorithm type indication and the second algorithm type indication. In addition, values of the computed second ciphering key and the computed second integrity key may be made different, so as to distinguish between the second ciphering key and the second integrity key.

In some feasible implementation manners, the obtaining module 1304 may be specifically configured to:
compute an intermediate key according to the first ciphering key and the first integrity key; and
use a first preset bit of the intermediate key as the second ciphering key, and use a second preset bit of the intermediate key as the second integrity key.

In a feasible implementation manner, the obtaining module 1304 may perform an operation on the first ciphering key and the first integrity key, and then use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the obtaining module 1304 may directly use an existing GPRS ciphering key Kc (64-bit) as the intermediate key, or directly use an existing Kc₁₂₈ (128-bit) as the intermediate key. Both Kc and Kc₁₂₈ are generated by means of computation according to the CK and the IK.

In a feasible implementation manner, the obtaining module 1304 may use a first preset bit of the intermediate key as the second ciphering key. For example, if a GPRS system requires a 64-bit second ciphering key, the most significant 64 bits of the intermediate key may be directly used as the second ciphering key; if the GPRS system requires a 128-bit second ciphering key, the most significant 128 bits of the intermediate key may be directly used as the second ciphering key. In another optional implementation manner, a required quantity of bits may be randomly selected from the intermediate key as the second ciphering key, which is not limited in this application.

In a feasible implementation manner, the obtaining module 1304 may use a second preset bit of the intermediate key as the second integrity key. For example, if a GPRS system requires a 64-bit second integrity key, the least significant 64 bits of the intermediate key may be directly used as the second integrity key; if the GPRS system requires a 128-bit second integrity key, the least significant 128 bits of the intermediate key may be directly used as the second integrity key. In another optional implementation manner, a required quantity of bits may be randomly selected from the intermediate key as the second integrity key, which is not limited in this application.

In some feasible implementation manners, the obtaining module 1304 may be specifically configured to:
use the first ciphering key or a preset bit of the first ciphering key as the second ciphering key, and use the first integrity key or a preset bit of the first integrity key as the second integrity key.

In some feasible implementation manners, if the first ciphering key is a 128-bit key, and the second ciphering key required by a GPRS system is also a 128-bit key, the first ciphering key may be directly used as the second ciphering key. If the second ciphering key required by the GPRS system is a 64-bit key, 64 preset bits may be selected from the first ciphering key as the second ciphering key. For example, the most significant 64 bits are selected as the second ciphering key.

In some feasible implementation manners, if the first integrity key is a 128-bit key, and the second integrity key required by a GPRS system is also a 128-bit key, the first integrity key may be directly used as the second integrity key. If the second integrity key required by the GPRS system is a 64-bit key, 64 preset bits may be selected from the first integrity key as the second integrity key. For example, the most significant 64 bits are selected as the second integrity key.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that the UE computes the second ciphering key and the second integrity key, and performs ciphering protection and integrity protection on a communication message between the SGSN and the UE by using the second ciphering key and the second integrity key. This enhances security of communication of UE of the first type in a GPRS network.

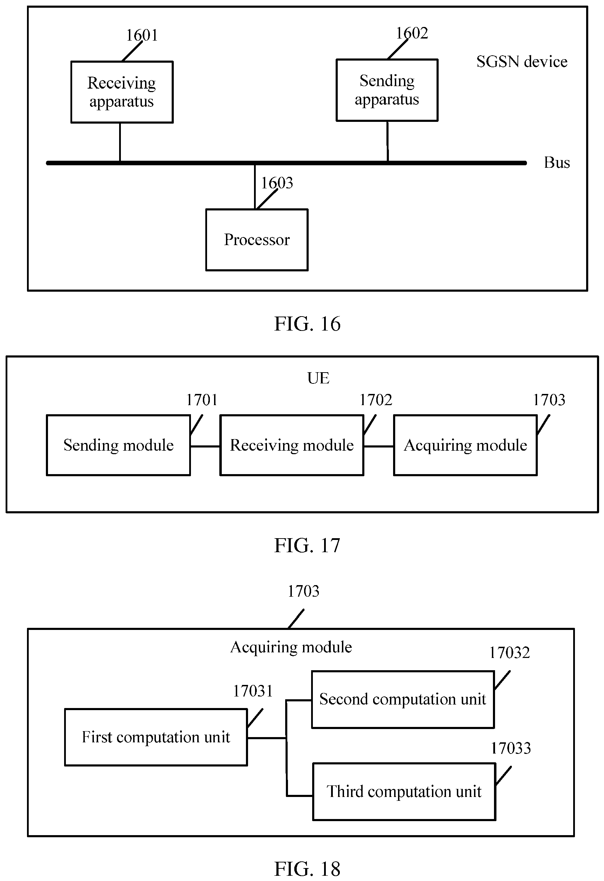

Refer to FIG. 16. FIG. 16 is a schematic structural diagram of another embodiment of an SGSN device according to this application. As shown in FIG. 16, the SGSN device may include a receiving apparatus 1601, a sending apparatus 1602, and a processor 1603, where the receiving apparatus 1601, the sending apparatus 1602, and the processor 1603 are connected by using a bus.

The receiving apparatus 1601 is configured to receive a request message sent by UE.

The processor 1603 is configured to:
acquire an authentication vector from an HLR/HSS, where the authentication vector includes a first ciphering key and a first integrity key;
if the SGSN determines that the UE is UE of a first type, select a ciphering algorithm and an integrity algorithm for the UE; and
obtain a second ciphering key and a second integrity key according to the first ciphering key and the first integrity key.

The sending apparatus 1602 is configured to send the selected ciphering algorithm and the selected integrity algorithm to the UE.

The second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.

In some feasible implementation manners, the request message includes an identifier of the UE.

The sending apparatus 1602 is further configured to send the identifier of the UE to the HLR/HSS, so that the HLR/HSS determines, according to the identifier of the UE, that the UE is UE of the first type, and sends UE type indication information to the SGSN, where the UE type indication information is used to indicate that the UE is UE of the first type.

That the processor 1603 determines whether the UE is UE of a first type includes: receiving, by the processor 1603, the UE type indication information sent by the HLR/HSS, and determining that the UE is UE of the first type.

In some feasible implementation manners, that the processor 1603 determines that the UE is UE of a first type includes:
if the request message includes UE type indication information, determining, by the processor 1603, that the UE is UE of the first type.

In some feasible implementation manners, that the processor 1603 obtains a second ciphering key and a second integrity key according to the first ciphering key and the first integrity key includes:
computing, by the processor 1603, an intermediate key according to the first ciphering key and the first integrity key;
computing, by the processor 1603, the second ciphering key according to the intermediate key and a ciphering characteristic string; and
computing, by the processor 1603, the second integrity key according to the intermediate key and an integrity characteristic string.

In some feasible implementation manners, that the processor 1603 obtains a second ciphering key and a second integrity key according to the first ciphering key and the first integrity key includes:
computing, by the processor, an intermediate key according to the first ciphering key and the first integrity key; and using, by the processor, a first preset bit of the intermediate key as the second ciphering key, and using a second preset bit of the intermediate key as the second integrity key; or
computing, by the processor, the second ciphering key according to the first ciphering key in the authentication vector, a first algorithm type indication, and an identifier of the selected ciphering algorithm, and computing, by the processor, the second integrity key according to the first integrity key in the authentication vector, a second algorithm type indication, and an identifier of the selected integrity algorithm, where values of the first algorithm type indication and the second algorithm type indication are different; or
using, by the processor, the first ciphering key or a preset bit of the first ciphering key as the second ciphering key, and using, by the processor, the first integrity key or a preset bit of the first integrity key as the second integrity key.

In some feasible implementation manners, the authentication vector is an authentication vector quintet.

The first ciphering key is a ciphering key CK in the authentication vector quintet, and the first integrity key is an integrity key IK in the authentication vector quintet.

In some feasible implementation manners, the intermediate key is a 64-bit GPRS ciphering key Kc or a 128-bit ciphering key Kc₁₂₈.

In this embodiment of this application, an SGSN receives a request message sent by UE, after determining that the UE is UE of a first type, selects a ciphering algorithm and an integrity algorithm, acquires an authentication vector from an HLR/HSS, obtains an enhanced second ciphering key and an enhanced second integrity key according to a first ciphering key and a first integrity key that are included in the authentication vector, and sends the selected ciphering algorithm and the selected integrity algorithm to the UE, so that after the UE computes the second ciphering key and the second integrity key, both the SGSN and the UE may perform ciphering protection and integrity protection on a communication message between the SGSN and the UE by using the second ciphering key, the second integrity key, and the ciphering algorithm and the integrity algorithm that are selected by the SGSN. This enhances security of communication of UE of the first type in a GPRS network.

Refer to FIG. 17. FIG. 17 is a schematic structural diagram of an embodiment of UE according to this application. As shown in FIG. 17, the UE may include a sending module 1701, a receiving module 1702, and an acquiring module 1703.

The sending module 1701 is configured to send a request message to an SGSN.

In specific implementation, the request message sent by the sending module 1701 to the SGSN may be an attach request message, a route update message, or another message, for example, a service request message. After receiving the request message sent by the UE, the SGSN may acquire an identifier of the UE that sends the request message. If the UE is UE of a first type, the request message may carry UE type indication information.

In this embodiment of this application, the UE communicates with a network by using a USIM card, and the identifier of the UE may be an IMSI (International Mobile Subscriber Identification Number, international mobile subscriber identity) of the USIM card. Internet of Things UE refers to user equipment that has an information sensing function and a message transmission function, for example, an audio guide, a personal digital assistant, a barcode collector, a data collection terminal, and a POS terminal that is mainly used for purchase or transfer. Machine to machine communication UE refers to user equipment that has a networking and communication capability and that implements an "intelligence" attribute by using a sensor, a controller, and the like, so as to exchange information with a person, a mobile network, or another machine.

The UE in this embodiment of this application is UE of the first type. In some feasible implementation manners, the request message that is sent by the sending module 1701 to the SGSN may include the UE type indication information, so that the SGSN determines, according to the UE type indication information, that the UE is UE of the first type.

Optionally, the UE type indication information may indicate, according to existence of a specific information element (Information Element, IE), that the UE is UE of the first type. For example, when the SGSN receives the UE type indication information sent by the HLR/HSS or the UE, if a specific IE exists in the UE type indication information, the SGSN may determine that the UE is UE of the first type, and if the specific IE does not exist in the UE type indication information, the SGSN may determine that the UE is not UE of the first type. Alternatively, the UE type indication information may also indicate, according to a value of a specific IE, that the UE is UE of the first type. For example, when the SGSN receives the UE type indication information sent by the HLR/HSS or the UE, if a value of a specific IE in the UE type indication information is 1, the SGSN may determine that the UE is UE of the first type, and if the value of the specific IE is 0, the SGSN may determine that the UE is not UE of the first type.

In specific implementation, the UE and the SGSN are separately configured with some ciphering algorithms and integrity algorithms. When sending the request message to the SGSN, the sending module 1701 sends a ciphering algorithm and an integrity algorithm that are supported by the UE to the SGSN.

The receiving module 1702 is configured to receive a ciphering algorithm and an integrity algorithm that are sent by the SGSN.

After the SGSN receives the request message of the UE, if it is determined that the foregoing UE is UE of the first type, the SGSN selects a ciphering algorithm supported by the SGSN and an integrity algorithm supported by the SGSN from the ciphering algorithm and the integrity algorithm that are supported by the UE. The SGSN sends the selected ciphering algorithm and the selected integrity algorithm to the UE, and obtains a second ciphering key and a second integrity key according to a first ciphering key and a first integrity key in an authentication vector.

In specific implementation, when sending the selected ciphering algorithm and the selected integrity algorithm to the UE, the SGSN may further send a random number RAND and an authentication token AUTN in the authentication vector to the UE. The UE may perform authentication on the SGSN side according to the authentication token AUTN, so that the UE side performs authentication on a network side. The UE may further compute the first ciphering key and the first integrity key by using f1 to f5 algorithms according to the received random number RAND and the received authentication token AUTN. The first ciphering key and the first integrity key that are computed by the UE are the same as the first ciphering key and the first integrity key in the authentication vector that is acquired by the SGSN from the HLR/HSS. The authentication vector acquired by the SGSN from the HLR/HSS is an authentication vector quintet, which includes a random number RAND, an expected response XRES, an authentication token AUTN, a ciphering key CK, and an integrity key IK.

In this embodiment of this application, the first ciphering key is the ciphering key CK in the authentication vector quintet, and the first integrity key is the integrity key IK in the authentication vector quintet.

In some feasible implementation manners, the ciphering algorithm and the integrity algorithm that are selected by the SGSN may be used along with the first ciphering key CK and the first integrity key IK in the authentication vector to compute a second ciphering key and a second integrity key. In addition, ciphering may be performed on a communication message according to the ciphering algorithm and the generated second ciphering key to generate a message ciphertext. A message authentication code MAC may be obtained by means of computation according to the integrity algorithm and the generated second integrity key. The message authentication code MAC may be used to verify integrity of the communication message.

Optionally, when a GPRS network requires a 128-bit second ciphering key, the ciphering algorithm selected by the SGSN may be any one of a 128-EEA1 algorithm, a 128-EEA2 algorithm, or a 128-EEA3 algorithm, and the integrity algorithm selected by the SGSN may be any one of a 128-EIA1 algorithm, a 128-EIA2 algorithm, or a 128-EIA3 algorithm. A SNOW 3G algorithm is used as a core algorithm of the 128-EEA1 algorithm and the 128-EIA1 algorithm. An AES algorithm is used as a core algorithm of the 128-EEA2 algorithm and the 128-EIA2 algorithm. A ZUC algorithm (ZUC algorithm) is used as a core algorithm of the 128-EEA3 algorithm and the 128-EIA3 algorithm.

The acquiring module 1703 is configured to acquire the second ciphering key and the second integrity key according to the first ciphering key and the first integrity key.

In this embodiment of this application, the second ciphering key and the second integrity key are enhanced keys on the basis of the first ciphering key and the first integrity key. The second ciphering key and the ciphering algorithm sent by the SGSN are used to perform ciphering protection on a message transmitted between the SGSN and the UE, and the second integrity key and the integrity algorithm sent by the SGSN are used to perform integrity protection on a message transmitted between the SGSN and the UE.

Optionally, the acquiring module 1703 may acquire the second ciphering key and the second integrity key only according to the first ciphering key and the first integrity key, or the acquiring module 1703 may acquire the second ciphering key and the second integrity key according to the first ciphering key, the first integrity key, and the ciphering algorithm and the integrity algorithm that are sent by the SGSN.

After the second ciphering key and the second integrity key are acquired, to protect a communication message between the SGSN and the UE, both the SGSN and the UE need to use an agreed key (that is, the second ciphering key and the second integrity key) and an agreed algorithm (that is, the ciphering algorithm and the integrity algorithm that are sent by the SGSN) to perform ciphering on the communication message.

In this embodiment of this application, UE sends a request message to an SGSN, receives a ciphering algorithm and an integrity algorithm that are sent by the SGSN, and computes a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

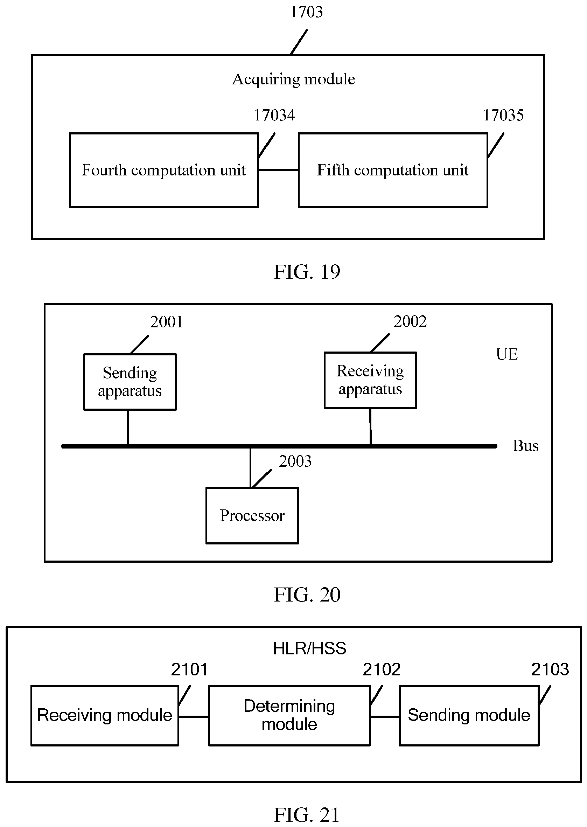

The following describes, in detail, a structure and a function of the acquiring module 1703 shown in FIG. 17 with reference to FIG. 18 and FIG. 19.

In some feasible implementation manners, as shown in FIG. 18, the acquiring module 1703 may include a first computation unit 17031, a second computation unit 17032, and a third computation unit 17033.

The first computation unit 17031 is configured to compute an intermediate key according to the first ciphering key and the first integrity key.

In some feasible implementation manners, before the first computation unit 17031 computes the intermediate key, the UE first computes an expected message authentication code XMAC according to the authentication token AUTN and the random number RAND that are sent by the SGSN, and performs authentication on the SGSN side by determining whether the expected message authentication code XMAC is the same as a message authentication code MAC in the authentication token AUTN. After authentication on the SGSN side succeeds, the UE computes the first ciphering key CK and the first integrity key IK according to the random number RAND and the authentication token AUTN that are sent by the SGSN, computes a random number response RES, and sends the random number response RES to the SGSN, so that the SGSN side performs authentication on the UE.

In a feasible implementation manner, the first computation unit 17031 may perform an operation on the first ciphering key and the first integrity key, and then use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the intermediate key may directly use an existing 64-bit GPRS ciphering key Kc or an existing 128-bit ciphering key Kc₁₂₈, that is, the first computation unit 17031 may directly use the existing GPRS ciphering key Kc (64-bit) as the intermediate key, or directly use the existing Kc₁₂₈ (128-bit) as the intermediate key. Both Kc and Kc₁₂₈ are generated by means of computation according to the CK and the IK.

The second computation unit 17032 is configured to compute the second ciphering key according to the intermediate key and a ciphering characteristic string.

In specific implementation, the intermediate key and the ciphering characteristic string ciphering may be used as input parameters of a key derivation function KDF to compute the second ciphering key. For example, the second ciphering key may be obtained by means of computation by using K_{cipher}=KDF(Km, "ciphering"), where "ciphering" is a ciphering characteristic string, and may be generated by means of coding.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ may be used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

The third computation unit 17033 is configured to compute the second integrity key according to the intermediate key and an integrity characteristic string.

In specific implementation, the intermediate key and the integrity characteristic string integrity may be used as input parameters of a key derivation function KDF to compute the second integrity key. For example, the second integrity key may be obtained by means of computation by using K_{integrity}=KDF(Km, "integrity"), where "integrity" is an integrity characteristic string, and may be generated by means of coding.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the ciphering characteristic string ciphering and the integrity characteristic string integrity are used to make the computed second ciphering key and the computed second integrity key different for easy distinction. Therefore, the integrity characteristic string integrity may be any string inconsistent with the ciphering characteristic string ciphering.

In some feasible implementation manners, as shown in FIG. 18, the acquiring module 1703 may include a first computation unit 17031, a second computation unit 17032, and a third computation unit 17033.

The first computation unit 17031 is configured to compute an intermediate key according to the first ciphering key and the first integrity key.

In a feasible implementation manner, the first computation unit 17031 may perform an operation on the first ciphering key and the first integrity key, and then use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the first computation unit 17031 may directly use an existing GPRS ciphering key Kc (64-bit) as the intermediate key, or directly use an existing Kc₁₂₈ (128-bit) as the intermediate key. Both Kc and Kc₁₂₈ are generated by means of computation according to the CK and the IK.

The second computation unit 17032 is configured to compute the second ciphering key according to the intermediate key, a first algorithm type indication, and an identifier of the ciphering algorithm.

In specific implementation, the second computation unit 17032 may use the intermediate key, the first algorithm type indication, and the identifier of the ciphering algorithm as input parameters of a key derivation function KDF to compute the second ciphering key. For example, the second ciphering key K_{cipher} may be obtained by means of computation by using K_{cipher}=KDF(Km, algorithm type distinguisher1, ciphering algorithm id), where Km is the intermediate key, algorithm type distinguisher1 is the first algorithm type indication, and ciphering algorithm id is the identifier of the ciphering algorithm selected by the SGSN.

In some feasible implementation manners, a GPRS system requires a 128-bit second ciphering key, and in this case, preset 128 bits (for example, the most significant 128 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 128 bits (for example, the most significant 128 bits) are intercepted from an output of the KDF as the second ciphering key; or the intermediate key Kc₁₂₈ is used as one of input parameters of a key derivation function KDF, and an output of the key derivation function KDF is used as the second ciphering key.

In some feasible implementation manners, a GPRS system requires a 64-bit second ciphering key, and in this case, preset 64 bits (for example, the most significant 64 bits) may be intercepted from the computed intermediate key Km as one of input parameters of a key derivation function KDF, and an output of the KDF is used as the second ciphering key; or the computed intermediate key Km may be directly used as one of input parameters of a key derivation function KDF, and preset 64 bits (for example, the most significant 64 bits) are intercepted from an output of the KDF as the second ciphering key; or the intermediate key Kc (64-bit) may be used as one of input parameters of a key derivation function KDF, and an output of the key derivation function KDF is used as the second ciphering key.

The third computation unit 17033 is configured to compute the second integrity key according to the intermediate key, a second algorithm type indication, and an identifier of the integrity algorithm, where values of the first algorithm type indication and the second algorithm type indication are different.

In specific implementation, the third computation unit 17033 may use the intermediate key, the second algorithm type indication, and the identifier of the integrity algorithm as input parameters of a key derivation function KDF to compute the second integrity key. For example, the second integrity key K_{cipher} may be obtained by means of computation by using K_{integrity}=KDF(Km, algorithm type distinguisher2, integrity algorithm id), where Km is the intermediate key, algorithm type distinguisher2 is the second algorithm type indication, and integrity algorithm id is the identifier of the integrity algorithm selected by the SGSN.

In some feasible implementation manners, a GPRS system requires a 128-bit second integrity key, and in this case, preset 128 bits (for example, the most significant 128 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 128 bits (for example, the most significant 128 bits) are intercepted from an output of the KDF as the second integrity key; or the intermediate key Kc₁₂₈ may be used as one of input parameters of a key derivation function KDF, and an output of the key derivation function KDF is used as the second integrity key.

In some feasible implementation manners, a GPRS system requires a 64-bit second integrity key, and in this case, preset 64 bits (for example, the most significant 64 bits) may be intercepted from the computed intermediate key Km as one of input parameters of a key derivation function KDF, and an output of the KDF is used as the second integrity key; or the computed intermediate key Km may be directly used as one of input parameters of a key derivation function KDF, and preset 64 bits (for example, the most significant 64 bits) are intercepted from an output of the KDF as the second integrity key; or the intermediate key Kc (64-bit) may be used as one of input parameters of a key derivation function KDF, and an output of the key derivation function KDF is used as the second integrity key.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of IEs in the first algorithm type indication and the second algorithm type indication. In addition, values of the computed second ciphering key and the computed second integrity key may be made different, so as to distinguish between the second ciphering key and the second integrity key.

In some feasible implementation manners, as shown in FIG. 19, the acquiring module 1703 may include a fourth computation unit 17034 and a fifth computation unit 17035.

The fourth computation unit 17034 is configured to compute the second ciphering key according to the first ciphering key, a first algorithm type indication, and an identifier of the ciphering algorithm.

In some feasible implementation manners, before the fourth computation unit 17034 computes the second ciphering key and the fifth computation unit 17035 computes the second integrity key, the UE first computes an expected message authentication code XMAC according to the authentication token AUTN and the random number RAND that are sent by the SGSN, and performs authentication on the SGSN side by determining whether the expected message authentication code XMAC is the same as a message authentication code MAC in the authentication token AUTN. After authentication on the SGSN side succeeds, the UE computes the first ciphering key CK and the first integrity key IK according to the random number RAND and the authentication token AUTN that are sent by the SGSN, computes a random number response RES, and sends the random number response RES to the SGSN, so that the SGSN side performs authentication on the UE.

Specifically, the fourth computation unit 17034 may use the first ciphering key, the first algorithm type indication, and the identifier of the selected ciphering algorithm as input parameters of a key derivation function KDF to compute the second ciphering key. For example, K_{cipher}=KDF(CK, algorithm type distinguisher1, ciphering algorithm id), where CK is the first ciphering key, algorithm type distinguisher1 is the first algorithm type indication, and ciphering algorithm id is the identifier of the ciphering algorithm selected by the SGSN.

Optionally, if a GPRS system requires a 64-bit second ciphering key, the most significant 64 bits may be selected from computed K_{cipher} as the second ciphering key; if the GPRS system requires a 128-bit second ciphering key, the most significant 128 bits may be selected from computed K_{cipher} as the second ciphering key. In another feasible implementation manner, a required quantity of bits may be randomly selected from computed K_{cipher} as the second ciphering key, which is not limited in this application.

The fifth computation unit 17035 is configured to compute the second integrity key according to the first integrity key, a second algorithm type indication, and an identifier of the integrity algorithm.

Specifically, the fifth computation unit 17035 may use the first integrity key, the second algorithm type indication, and the identifier of the selected integrity algorithm as input parameters of a key derivation function KDF to compute the second integrity key. For example, K_{integrity}=KDF(IK, algorithm type distinguisher2, integrity algorithm id), where IK is the first integrity key, algorithm type distinguisher2 is the second algorithm type indication, and integrity algorithm id is the identifier of the integrity algorithm selected by the SGSN.

Optionally, if a GPRS system requires a 64-bit second integrity key, the most significant 64 bits may be selected from computed K_{integrity} as the second integrity key; if the GPRS system requires a 128-bit second integrity key, the most significant 128 bits may be selected from computed K_{integrity} as the second integrity key.

In this embodiment of this application, the first algorithm type indication is used to indicate that an algorithm currently participating in an operation is an algorithm of a ciphering type, and the second algorithm type indication is used to indicate that an algorithm currently participating in an operation is an algorithm of an integrity type. Values of the first algorithm type indication and the second algorithm type indication are different. In some feasible embodiments, the first algorithm type indication and the second algorithm type indication may include a same IE, and the first algorithm type indication and the second algorithm type indication are distinguished by using different values of the IE. For example, the IEs of the first algorithm type indication and the second algorithm type indication are both algorithm type distinguisher. When algorithm type distinguisher=00, it indicates an algorithm of a ciphering type. When algorithm type distinguisher=01, it indicates an algorithm of an integrity type.

In some possible cases, the ciphering algorithm and the integrity algorithm may use a same identifier, and in these cases, each algorithm needs to be uniquely distinguished with reference to an algorithm type indication. For example, if both a 128-EEA1 algorithm and 128-EIA1 algorithm use 1 as an algorithm identifier, when the ciphering algorithm and the integrity algorithm that are selected by the SGSN are the 128-EEA1 algorithm and the 128-EIA1 algorithm respectively, the 128-EEA1 algorithm and the 128-EIA1 algorithm may be distinguished by using different values of the first algorithm type indication and the second algorithm type indication. In addition, values of the computed second ciphering key and the computed second integrity key may be made different, so as to distinguish between the second ciphering key and the second integrity key.

In some feasible implementation manners, the acquiring module 1703 may be specifically configured to:
compute an intermediate key according to the first ciphering key and the first integrity key; and
use a first preset bit of the intermediate key as the second ciphering key, and use a second preset bit of the intermediate key as the second integrity key.

In some feasible implementation manners, before the acquiring module 1703 computes the intermediate key, the UE first computes an expected message authentication code XMAC according to the authentication token AUTN and the random number RAND that are sent by the SGSN, and performs authentication on the SGSN side by determining whether the expected message authentication code XMAC is the same as a message authentication code MAC in the authentication token AUTN. After authentication on the SGSN side succeeds, the UE computes the first ciphering key CK and the first integrity key IK according to the random number RAND and the authentication token AUTN that are sent by the SGSN, computes a random number response RES, and sends the random number response RES to the SGSN, so that the SGSN side performs authentication on the UE.

In a feasible implementation manner, the acquiring module 1703 may perform an operation on the first ciphering key and the first integrity key, and then use an operation result as an input parameter of a key derivation function KDF to compute the intermediate key. For example, the intermediate key may be Km=KDF(CK||IK), where CK||IK indicates that a join operation is performed on the first ciphering key CK and the first integrity key IK.

In another feasible implementation manner, the intermediate key may directly use an existing 64-bit GPRS ciphering key Kc or an existing 128-bit ciphering key Kc₁₂₈, that is, the acquiring module 1703 may directly use the existing GPRS ciphering key Kc (64-bit) as the intermediate key, or directly use the existing Kc₁₂₈ (128-bit) as the intermediate key. Both Kc and Kc₁₂₈ are generated by means of computation according to the CK and the IK.

In a feasible implementation manner, the acquiring module 1703 may use a first preset bit of the intermediate key as the second ciphering key. For example, if a GPRS system requires a 64-bit second ciphering key, the most significant 64 bits of the intermediate key may be directly used as the second ciphering key; if the GPRS system requires a 128-bit second ciphering key, the most significant 128 bits of the intermediate key may be directly used as the second ciphering key. Optionally, a required quantity of bits may be randomly selected from the intermediate key as the second ciphering key, which is not limited in this application.

In a feasible implementation manner, the acquiring module 1703 may use a second preset bit of the intermediate key as the second integrity key. For example, if a GPRS system requires a 64-bit second integrity key, the least significant 64 bits of the intermediate key may be directly used as the second integrity key; if the GPRS system requires a 128-bit second integrity key, the least significant 128 bits of the intermediate key may be directly used as the second integrity key. Optionally, a required quantity of bits may be randomly selected from the intermediate key as the second integrity key, which is not limited in this application.

In some feasible implementation manners, the acquiring module 1703 may be specifically configured to:
use the first ciphering key or a preset bit of the first ciphering key as the second ciphering key; and
use the first integrity key or a preset bit of the first integrity key as the second integrity key.

In some feasible implementation manners, before the acquiring module 1703 computes the second ciphering key or the second integrity key, the UE may first compute an expected message authentication code XMAC according to the authentication token AUTN and the random number RAND, and perform authentication on the SGSN side by determining whether the expected message authentication code XMAC is the same as a message authentication code MAC in the authentication token AUTN. After authentication on the SGSN side succeeds, the UE computes the first ciphering key CK and the first integrity key IK according to the random number RAND and the authentication token AUTN that are sent by the SGSN, computes a random number response RES, and sends the random number response RES to the SGSN, so that the SGSN side performs authentication on the UE.

In some feasible implementation manners, if the first ciphering key is a 128-bit key, and the second ciphering key required by a GPRS system is also a 128-bit key, the first ciphering key may be directly used as the second ciphering key. If the second ciphering key required by the GPRS system is a 64-bit key, 64 preset bits may be selected from the first ciphering key as the second ciphering key. For example, the most significant 64 bits are selected as the second ciphering key.

In some feasible implementation manners, if the first integrity key is a 128-bit key, and the second integrity key required by a GPRS system is also a 128-bit key, the first integrity key may be directly used as the second integrity key. If the second integrity key required by the GPRS system is a 64-bit key, 64 preset bits may be selected from the first integrity key as the second integrity key. For example, the most significant 64 bits are selected as the second integrity key.

In this embodiment of this application, UE sends a request message to an SGSN, receives a ciphering algorithm and an integrity algorithm that are sent by the SGSN, and computes a second ciphering key and a second integrity key according to a first ciphering key and a first integrity key. Both the SGSN and the UE may perform ciphering protection and integrity protection on a communication message between the UE and the SGSN by using the second ciphering key, the second integrity key, and the ciphering algorithm and the integrity algorithm that are sent by the SGSN to the UE. This enhances security of communication of UE of a first type in a GPRS network.

Refer to FIG. 20. FIG. 20 is a schematic structural diagram of another embodiment of UE according to this application. As shown in FIG. 20, the UE may include a sending apparatus 2001, a receiving apparatus 2002, and a processor 2003, where the sending apparatus 2001, the receiving apparatus 2002, and the processor 2003 may be connected by using a bus.

The sending apparatus 2001 is configured to send a request message to an SGSN.

The receiving apparatus 2002 is configured to receive a ciphering algorithm and an integrity algorithm that are sent by the SGSN.

The processor 2003 is configured to acquire a second ciphering key and a second integrity key according to a first ciphering key and a first integrity key.

The second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

In some feasible implementation manners, the request message sent by the sending apparatus 2001 to the SGSN includes UE type indication information, where the UE type indication information is used to indicate that the UE is UE of a first type.

In some feasible implementation manners, that the processor 2003 acquires a second ciphering key and a second integrity key according to a first ciphering key and a first integrity key includes:
computing, by the processor 2003, an intermediate key according to the first ciphering key and the first integrity key;
computing, by the processor 2003, the second ciphering key according to the intermediate key and a ciphering characteristic string; and
computing, by the processor 2003, the second integrity key according to the intermediate key and an integrity characteristic string.

In some feasible implementation manners, that the processor 2003 acquires a second ciphering key and a second integrity key according to a first ciphering key and a first integrity key includes:
computing, by the processor 2003, an intermediate key according to the first ciphering key and the first integrity key; and using, by the processor 2003, a first preset bit of the intermediate key as the second ciphering key, and using a second preset bit of the intermediate key as the second integrity key; or
computing, by the processor 2003, the second ciphering key according to the first ciphering key, a first algorithm type indication, and an identifier of the ciphering algorithm, and computing, by the processor 2003, the second integrity key according to the first integrity key, a second algorithm type indication, and an identifier of the integrity algorithm; or
using, by the processor 2003, the first ciphering key or a preset bit of the first ciphering key as the second ciphering key, and using, by the processor 2003, the first integrity key or a preset bit of the first integrity key as the second integrity key.

In some feasible implementation manners, the first ciphering key is a ciphering key CK in an authentication vector quintet, and the first integrity key is an integrity key IK in the authentication vector quintet.

In some feasible implementation manners, the intermediate key is a 64-bit GPRS ciphering key Kc or a 128-bit ciphering key Kc₁₂₈.

In this embodiment of this application, UE sends a request message to an SGSN, computes a second ciphering key and a second integrity key according to a ciphering algorithm and an integrity algorithm that are selected by the SGSN, a first ciphering key, and a first integrity key, and performs ciphering protection and integrity protection on a communication message between the UE and the SGSN by using the second ciphering key and the second integrity key. This enhances security of communication of UE of a first type in a GPRS network.

Refer to FIG. 21. FIG. 21 is a schematic structural diagram of an embodiment of an HLR/HSS according to an embodiment of this application. As shown in FIG. 21, the HLR/HSS may include a receiving module 2101, a determining module 2102, and a sending module 2103.

The receiving module 2101 is configured to receive an identifier of user equipment UE that is sent by a serving GPRS support node SGSN.

The home location register (Home Location Register, HLR) is a permanent database of a GPRS system, and stores information required for managing communication of many mobile users, including static information such as identity information, service information, and service authorization that are of a registered mobile user, and dynamic information such as location information of a user. The home subscription system HSS (Home Subscription System, HSS) is evolution and upgrade of the HLR, and is mainly responsible for managing subscription data of a user and location information of a mobile user. Because the HSS and the HLR have a similar function in a network, and much data stored in the HSS is repeatedly stored in the HLR, generally, an HSS and HLR convergence device is presented to the outside. In this embodiment of this application, the HLR/HSS may be an HLR device, an HSS device, or an HLR and HSS convergence device.

In this embodiment of this application, the UE communicates with a network by using a USIM card, and the identifier of the UE may be an IMSI (International Mobile Subscriber Identification Number, international mobile subscriber identity) of the USIM card.

The determining module 2102 is configured to determine, according to the identifier of the UE, that the UE is UE of a first type.

In specific implementation, the HLR/HSS stores various information of many UEs. After receiving the identifier of the UE that is sent by the SGSN, the HLR/HSS may query information about the UE, so as to determine whether the UE is UE of the first type. In this embodiment of this application, an example in which the UE is UE of the first type is used for description.

In this embodiment of this application, UE of the first type may include Internet of Things UE, machine to machine (Machine To Machine, M2M) communication UE, or other high-security UE. The Internet of Things UE refers to user equipment that has an information sensing function and a data transmission function, for example, an audio guide, a personal digital assistant, a barcode collector, a data collection terminal, and a POS terminal that is mainly used for purchase or transfer. The machine to machine communication UE refers to user equipment that has a networking and communication capability and that implements an "intelligence" attribute by using a sensor, a controller, and the like, so as to exchange information with a person, a mobile network, or another machine.

The sending module 2103 is configured to send UE type indication information to the SGSN, where the UE type indication information is used to indicate that the UE is UE of the first type.

Optionally, the UE type indication information may indicate, according to existence of a specific information element (Information Element, IE), that the UE is UE of the first type. For example, when the SGSN receives the UE type indication information sent by the HLR/HSS or the UE, if a specific IE exists in the UE type indication information, the SGSN may determine that the UE is UE of the first type, and if the specific IE does not exist in the UE type indication information, the SGSN may determine that the UE is not UE of the first type. Alternatively, the UE type indication information may also indicate, according to a value of a specific IE, that the UE is UE of the first type. For example, when the SGSN receives the UE type indication information sent by the HLR/HSS or the UE, if a value of a specific IE in the UE type indication information is 1, the SGSN may determine that the UE is UE of the first type, and if the value of the specific IE is 0, the SGSN may determine that the UE is not UE of the first type.

In this embodiment of this application, the HLR/HSS may further send an authentication vector to the SGSN, where the authentication vector includes a first ciphering key and a first integrity key.

In some feasible implementation manners, the foregoing authentication vector may be an authentication vector quintet, which includes a random number RAND, an expected response XRES, an authentication token AUTN, a ciphering key CK, and an integrity key IK. The first ciphering key is the ciphering key CK in the authentication vector quintet, and the first integrity key is the integrity key IK in the authentication vector quintet.

In this embodiment of this application, an HLR/HSS may receive an identifier of UE that is sent by an SGSN, determine, according to the identifier of the UE, that the UE is UE of a first type, and send UE type indication information to the SGSN so as to indicate that the UE is UE of the first type, so that key enhancement processing for the UE of the first type may be performed between the SGSN and the UE of the first type, and security of communication of the UE of the first type in a GPRS network is enhanced.

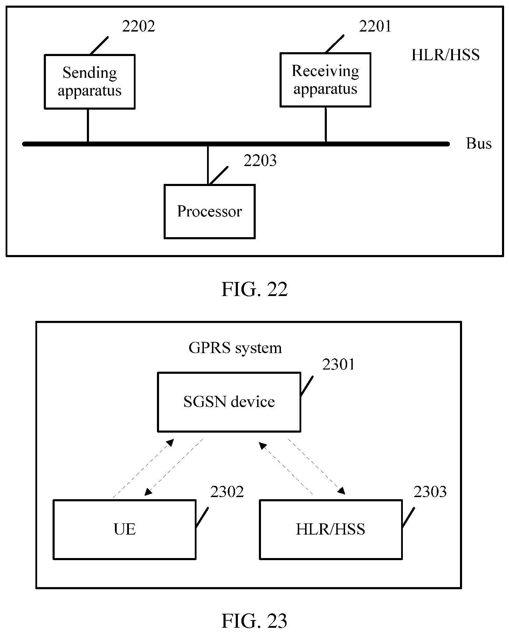

Refer to FIG. 22. FIG. 22 is a schematic structural diagram of another embodiment of an HLR/HSS according to an embodiment of this application. As shown in FIG. 22, the HLR/HSS may include a receiving apparatus 2201, a sending apparatus 2202, and a processor 2203, where the receiving apparatus 2201, the sending apparatus 2202, and the processor 2203 are connected by using a bus.

The receiving apparatus 2201 is configured to receive an identifier of user equipment UE that is sent by an SGSN.

The processor 2203 is configured to determine, according to the identifier of the UE, that the UE is UE of a first type.

The sending apparatus 2202 is configured to send UE type indication information to the SGSN, where the UE type indication information is used to indicate that the UE is UE of the first type.

In this embodiment of this application, an HLR/HSS may receive an identifier of UE that is sent by an SGSN, determine, according to the identifier of the UE, that the UE is UE of a first type, and send UE type indication information to the SGSN so as to indicate that the UE is UE of the first type, so that key enhancement processing for the UE of the first type may be performed between the SGSN and the UE of the first type, and security of communication of the UE of the first type in a GPRS network is enhanced.

Refer to FIG. 23. FIG. 23 is a schematic structural diagram of an embodiment of a GPRS system according to an embodiment of this application. As shown in FIG. 23, the GPRS system may include an SGSN device 2301, UE 2302, and an HLR/HSS 2303.

The SGSN device is configured to: receive a request message sent by the UE, acquire an authentication vector from the HLR/HSS, where the authentication vector includes a first ciphering key and a first integrity key, if the SGSN determines that the UE is UE of a first type, select a ciphering algorithm and an integrity algorithm for the UE, send the selected ciphering algorithm and the selected integrity algorithm to the UE, and obtain a second ciphering key and a second integrity key according to the first ciphering key and the first integrity key.

The UE is configured to: send the request message to the SGSN, receive the ciphering algorithm and the integrity algorithm that are sent by the SGSN, and acquire the second ciphering key and the second integrity key according to the first ciphering key and the first integrity key.

The second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

In some feasible implementation manners, the HLR/HSS 2303 may be configured to:
receive an identifier of the UE that is sent by the SGSN;
determine, according to the identifier of the UE, that the UE is UE of the first type; and
send UE type indication information to the SGSN, where the UE type indication information is used to indicate that the UE is UE of the first type.

In this embodiment of this application, UE sends a request message to an SGSN. After determining that the UE is UE of a first type, the SGSN selects a ciphering algorithm and an integrity algorithm. Both the UE and the SGSN compute an enhanced second ciphering key and an enhanced second integrity key according to a first ciphering key and a first integrity key, and perform ciphering protection and integrity protection on a communication message between the UE and the SGSN by using the second ciphering key, the second integrity key, and the ciphering algorithm and the integrity algorithm that are selected by the SGSN. This enhances security of communication of UE of the first type in a GPRS network.

Accordingly, an embodiment of this application further discloses a computer storage medium, where the computer storage medium stores a program, and when the program runs, the embodiments described in any one of FIG. 1 to FIG. 5 of this application may be performed.

Accordingly, an embodiment of this application further discloses another computer storage medium, where the computer storage medium stores a program, and when the program runs, the embodiments described in any one of FIG. 6 to FIG. 10 of this application may be performed.

Accordingly, an embodiment of this application further discloses still another computer storage medium, where the computer storage medium stores a program, and when the program runs, the embodiment described in FIG. 11 of this application may be performed.

Further embodiments of the present invention are provided in the following. It should be noted that the numbering used in the following section does not necessarily need to comply with the numbering used in the previous sections.
Embodiment1. A GPRS system key enhancement method, comprising:
   receiving, by a serving GPRS support node SGSN, a request message sent by user equipment UE;
   acquiring, by the SGSN, an authentication vector from a home location register HLR/home subscription system HSS, wherein the authentication vector comprises a first ciphering key and a first integrity key;
   if the SGSN determines that the UE is UE of a first type, selecting a ciphering algorithm and an integrity algorithm for the UE, and sending the selected ciphering algorithm and the selected integrity algorithm to the UE; and
   obtaining, by the SGSN, a second ciphering key and a second integrity key according to the first ciphering key and the first integrity key, wherein
   the second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.
Embodiment 2. The method according to claim 1, wherein the request message comprises an identifier of the UE, and that the SGSN determines that the UE is UE of a first type comprises:
   sending, by the SGSN, the identifier of the UE to the HLR/HSS, so that the HLR/HSS determines, according to the identifier of the UE, that the UE is UE of the first type, and sends UE type indication information to the SGSN, wherein the UE type indication information is used to indicate that the UE is UE of the first type; and
   receiving, by the SGSN, the UE type indication information sent by the HLR/HSS, and determining that the UE is UE of the first type.
Embodiment 3. The method according to embodiment 1, wherein that the SGSN determines that the UE is UE of a first type comprises:
   if the request message comprises UE type indication information, determining, by the SGSN, that the UE is UE of the first type, wherein the UE type indication information is used to indicate that the UE is UE of the first type.
Embodiment 4. The method according to any one of embodiments 1 to 3, wherein the obtaining, by the SGSN, a second ciphering key and a second integrity key according to the first ciphering key and the first integrity key comprises:
   computing, by the SGSN, an intermediate key according to the first ciphering key and the first integrity key, computing, by the SGSN, the second ciphering key according to the intermediate key and a ciphering characteristic string, and computing, by the SGSN, the second integrity key according to the intermediate key and an integrity characteristic string; or
   computing, by the SGSN, an intermediate key according to the first ciphering key and the first integrity key, computing, by the SGSN, the second ciphering key according to the intermediate key, a first algorithm type indication, and an identifier of the selected ciphering algorithm, and computing, by the SGSN, the second integrity key according to the intermediate key, a second algorithm type indication, and an identifier of the selected integrity algorithm, wherein values of the first algorithm type indication and the second algorithm type indication are different.
Embodiment 5. The method according to any one of embodiments 1 to 3, wherein the obtaining, by the SGSN, a second ciphering key and a second integrity key according to the first ciphering key and the first integrity key comprises:
   computing, by the SGSN, an intermediate key according to the first ciphering key and the first integrity key; and using, by the SGSN, a first preset bit of the intermediate key as the second ciphering key, and using a second preset bit of the intermediate key as the second integrity key; or
   computing, by the SGSN, the second ciphering key according to the first ciphering key, a first algorithm type indication, and an identifier of the selected ciphering algorithm, and computing, by the SGSN, the second integrity key according to the first integrity key, a second algorithm type indication, and an identifier of the selected integrity algorithm, wherein values of the first algorithm type indication and the second algorithm type indication are different; or
   using, by the SGSN, the first ciphering key or a preset bit of the first ciphering key as the second ciphering key, and using, by the SGSN, the first integrity key or a preset bit of the first integrity key as the second integrity key.
Embodiment 6. The method according to embodiment 4 or 5, wherein:
   the authentication vector is an authentication vector quintet; and
   the first ciphering key is a ciphering key CK in the authentication vector quintet, and the first integrity key is an integrity key IK in the authentication vector quintet.
Embodiment 7. The method according to embodiment 6, wherein the intermediate key is a 64-bit GPRS ciphering key Kc or a 128-bit ciphering key Kc₁₂₈.
Embodiment 8. A GPRS system key enhancement method, comprising:
   sending, by user equipment UE, a request message to a serving GPRS support node SGSN;
   receiving, by the UE, a ciphering algorithm and an integrity algorithm that are sent by the SGSN; and
   acquiring, by the UE, a second ciphering key and a second integrity key according to a first ciphering key and a first integrity key, wherein
   the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.
Embodiment 9. The method according to embodiment 8, wherein the request message that is sent by the UE to the SGSN comprises UE type indication information, wherein the UE type indication information is used to indicate that the UE is UE of a first type.
Embodiment 10. The method according to embodiment 8 or 9, wherein the acquiring, by the UE, a second ciphering key and a second integrity key according to a first ciphering key and a first integrity key comprises:
   computing, by the UE, an intermediate key according to the first ciphering key and the first integrity key, computing, by the UE, the second ciphering key according to the intermediate key and a ciphering characteristic string, and computing, by the UE, the second integrity key according to the intermediate key and an integrity characteristic string; or
   computing, by the UE, an intermediate key according to the first ciphering key and the first integrity key, computing, by the UE, the second ciphering key according to the intermediate key, a first algorithm type indication, and an identifier of the ciphering algorithm, and computing, by the UE, the second integrity key according to the intermediate key, a second algorithm type indication, and an identifier of the integrity algorithm, wherein values of the first algorithm type indication and the second algorithm type indication are different.
Embodiment 11. The method according to embodiment 8 or 9, wherein that the UE computes a second ciphering key and a second integrity key according to the ciphering algorithm, the integrity algorithm, a first ciphering key, and a first integrity key comprises:
   computing, by the UE, an intermediate key according to the first ciphering key and the first integrity key; and using, by the UE, a first preset bit of the intermediate key as the second ciphering key, and using a second preset bit of the intermediate key as the second integrity key; or
   computing, by the UE, the second ciphering key according to the first ciphering key, a first algorithm type indication, and an identifier of the ciphering algorithm, and computing, by the UE, the second integrity key according to the first integrity key, an algorithm type indication, and an identifier of the integrity algorithm, wherein values of the first algorithm type indication and the second algorithm type indication are different; or
   using, by the UE, the first ciphering key or a preset bit of the first ciphering key as the second ciphering key, and using, by the UE, the first integrity key or a preset bit of the first integrity key as the second integrity key.
Embodiment 12. The method according to embodiment 10 or 11, wherein the first ciphering key is a ciphering key CK in an authentication vector quintet, and the first integrity key is an integrity key IK in the authentication vector quintet.
Embodiment 13. The method according to embodiment 12, wherein the intermediate key is a 64-bit GPRS ciphering key Kc or a 128-bit ciphering key Kc₁₂₈.
Embodiment 14. A GPRS system key enhancement method, comprising:
   receiving, by a home location register HLR/home subscription system HSS, an identifier of user equipment UE that is sent by a serving GPRS support node SGSN;
   determining, by the HLR/HSS according to the identifier of the UE, that the UE is UE of a first type; and
   sending, by the HLR/HSS, UE type indication information to the SGSN, wherein the UE type indication information is used to indicate that the UE is UE of the first type.
Embodiment 15. A serving GPRS support node SGSN device, comprising:
   a receiving module, configured to receive a request message sent by user equipment UE;
   an acquiring module, configured to acquire an authentication vector from a home location register HLR/home subscription system HSS, wherein the authentication vector comprises a first ciphering key and a first integrity key;
   a selection module, configured to: when the SGSN determines that the UE is UE of a first type, select a ciphering algorithm and an integrity algorithm for the UE, and send the selected ciphering algorithm and the selected integrity algorithm to the UE; and
   an obtaining module, configured to obtain a second ciphering key and a second integrity key according to the first ciphering key and the first integrity key, wherein
   the second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.
Embodiment 16. The SGSN device according to embodiment 15, wherein the request message comprises an identifier of the UE, and the SGSN device further comprises:
   a sending module, configured to send the identifier of the UE to the HLR/HSS, so that the HLR/HSS determines, according to the identifier of the UE, whether the UE is UE of the first type, and sends UE type indication information to the SGSN, wherein the UE type indication information is used to indicate that the UE is UE of the first type; and
   a first determining module, configured to receive the UE type indication information sent by the HLR/HSS, and determine that the UE is UE of the first type.
Embodiment 17. The SGSN device according to embodiment 15, wherein the SGSN device further comprises:
   a second determining module, configured to: when the request message comprises UE type indication information, determine that the UE is UE of the first type, wherein the UE type indication information is used to indicate that the UE is UE of the first type.
Embodiment 18. The SGSN device according to any one of embodiments 15 to 17, wherein the obtaining module comprises a first computation unit, a second computation unit, and a third computation unit, wherein
   the first computation unit is configured to compute an intermediate key according to the first ciphering key and the first integrity key, the second computation unit is configured to compute the second ciphering key according to the intermediate key and a ciphering characteristic string, and the third computation unit is configured to compute the second integrity key according to the intermediate key and an integrity characteristic string; or
   the first computation unit is configured to compute an intermediate key according to the first ciphering key and the first integrity key, the second computation unit is configured to compute the second ciphering key according to the intermediate key, a first algorithm type indication, and an identifier of the selected ciphering algorithm, and the third computation unit is configured to compute the second integrity key according to the intermediate key, a second algorithm type indication, and an identifier of the selected integrity algorithm, wherein values of the first algorithm type indication and the second algorithm type indication are different.
Embodiment 19. The SGSN device according to any one of embodiments 15 to 17, wherein:
   the obtaining module is specifically configured to compute an intermediate key according to the first ciphering key and the first integrity key; and use a first preset bit of the intermediate key as the second ciphering key, and use a second preset bit of the intermediate key as the second integrity key; or
   the obtaining module comprises: a fourth computation unit, configured to compute the second ciphering key according to the first ciphering key, a first algorithm type indication, and an identifier of the selected ciphering algorithm, and a fifth computation unit, configured to compute the second integrity key according to the first integrity key, a second algorithm type indication, and an identifier of the selected integrity algorithm, wherein values of the first algorithm type indication and the second algorithm type indication are different; or
   the obtaining module is specifically configured to use the first ciphering key in the authentication vector or a preset bit of the first ciphering key as the second ciphering key, and use the first integrity key in the authentication vector or a preset bit of the first integrity key as the second integrity key.
Embodiment 20. The SGSN device according to embodiment 18 or 19, wherein:
   the authentication vector is an authentication vector quintet; and
   the first ciphering key is a ciphering key CK in the authentication vector quintet, and the first integrity key is an integrity key IK in the authentication vector quintet.
Embodiment 21. The SGSN device according to embodiment 20, wherein the intermediate key is a 64-bit GPRS ciphering key Kc or a 128-bit ciphering key Kc₁₂₈.
Embodiment 22. A computer storage medium, wherein the computer storage medium stores a program, and when the program runs, the steps described in any one of embodiments 1 to 7 are performed.
Embodiment 23. A serving GPRS support node SGSN device, comprising a receiving apparatus, a sending apparatus, and a processor, wherein the receiving apparatus, the sending apparatus, and the processor are connected by using a bus;
   the receiving apparatus is configured to receive a request message sent by user equipment UE;
   the processor is configured to:
   acquire an authentication vector from a home location register HLR/home subscription system HSS, wherein the authentication vector comprises a first ciphering key and a first integrity key;
   if the SGSN determines that the UE is UE of a first type, select a ciphering algorithm and an integrity algorithm for the UE; and
   obtain a second ciphering key and a second integrity key according to the first ciphering key and the first integrity key; and
   the sending apparatus is configured to send the selected ciphering algorithm and the selected integrity algorithm to the UE, wherein
   the second ciphering key and the selected ciphering algorithm are used to perform ciphering protection on a message transmitted between the SGSN and the UE, and the second integrity key and the selected integrity algorithm are used to perform integrity protection on a message transmitted between the SGSN and the UE.
Embodiment 24. The SGSN device according to embodiment 23, wherein the request message comprises an identifier of the UE;
   the sending apparatus is further configured to send the identifier of the UE to the HLR/HSS, so that the HLR/HSS determines, according to the identifier of the UE, whether the UE is UE of the first type, and sends UE type indication information to the SGSN, wherein the UE type indication information is used to indicate that the UE is UE of the first type; and
   that the processor determines that the UE is UE of a first type comprises: receiving, by the processor, the UE type indication information sent by the HLR/HSS, and determining that the UE is UE of the first type.
Embodiment 25. The SGSN device according to embodiment 23, wherein that the processor determines that the UE is UE of a first type comprises:
   if the request message comprises UE type indication information, determining, by the processor, that the UE is UE of the first type, wherein the UE type indication information is used to indicate that the UE is UE of the first type.
Embodiment 26. The SGSN device according to any one of embodiments 23 to 25, wherein that the processor obtains a second ciphering key and a second integrity key according to the first ciphering key and the first integrity key comprises:
   computing, by the processor, an intermediate key according to the first ciphering key and the first integrity key, computing, by the processor, the second ciphering key according to the intermediate key and a ciphering characteristic string, and computing, by the processor, the second integrity key according to the intermediate key and an integrity characteristic string; or
   computing, by the processor, an intermediate key according to the first ciphering key and the first integrity key, computing, by the processor, the second ciphering key according to the intermediate key, a first algorithm type indication, and an identifier of the selected ciphering algorithm, and computing, by the processor, the second integrity key according to the intermediate key, a second algorithm type indication, and an identifier of the selected integrity algorithm, wherein values of the first algorithm type indication and the second algorithm type indication are different.
Embodiment 27. The SGSN device according to any one of embodiments 23 to 25, wherein that the processor obtains a second ciphering key and a second integrity key according to the first ciphering key and the first integrity key comprises:
   computing, by the processor, an intermediate key according to the first ciphering key and the first integrity key; and using, by the processor, a first preset bit of the intermediate key as the second ciphering key, and using a second preset bit of the intermediate key as the second integrity key; or
   computing, by the processor, the second ciphering key according to the first ciphering key in the authentication vector, a first algorithm type indication, and an identifier of the selected ciphering algorithm, and computing, by the processor, the second integrity key according to the first integrity key in the authentication vector, a second algorithm type indication, and an identifier of the selected integrity algorithm, wherein values of the first algorithm type indication and the second algorithm type indication are different; or
   using, by the processor, the first ciphering key or a preset bit of the first ciphering key as the second ciphering key, and using, by the processor, the first integrity key or a preset bit of the first integrity key as the second integrity key.
Embodiment 28. The SGSN device according to embodiment 26 or 27, wherein:
   the authentication vector is an authentication vector quintet; and
   the first ciphering key is a ciphering key CK in the authentication vector quintet, and the first integrity key is an integrity key IK in the authentication vector quintet.
Embodiment 29. The SGSN device according to embodiment 28, wherein the intermediate key is a 64-bit GPRS ciphering key Kc or a 128-bit ciphering key Kc₁₂₈.
Embodiment 30. User equipment UE, comprising:
   a sending module, configured to send a request message to a serving GPRS support node SGSN;
   a receiving module, configured to receive a ciphering algorithm and an integrity algorithm that are sent by the SGSN; and
   an acquiring module, configured to acquire a second ciphering key and a second integrity key according to a first ciphering key and a first integrity key, wherein
   the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.
Embodiment 31. The UE according to embodiment 30, wherein the request message that is sent by the UE to the SGSN comprises UE type indication information, wherein the UE type indication information is used to indicate that the UE is UE of a first type.
Embodiment 32. The UE according to embodiment 30 or 31, wherein the acquiring module comprises: a first computation unit, a second computation unit, and a third computation unit, wherein
   the first computation unit is configured to compute an intermediate key according to the first ciphering key and the first integrity key, the second computation unit is configured to compute the second ciphering key according to the intermediate key and a ciphering characteristic string, and the third computation unit is configured to compute the second integrity key according to the intermediate key and an integrity characteristic string; or
   the first computation unit is configured to compute an intermediate key according to the first ciphering key and the first integrity key, the second computation unit is configured to compute the second ciphering key according to the intermediate key, a first algorithm type indication, and an identifier of the ciphering algorithm, and the third computation unit is configured to compute the second integrity key according to the intermediate key, a second algorithm type indication, and an identifier of the integrity algorithm, wherein values of the first algorithm type indication and the second algorithm type indication are different.
Embodiment 33. The UE according to embodiment 30 or 31, wherein:
   the acquiring module is specifically configured to compute an intermediate key according to the first ciphering key and the first integrity key; and use a first preset bit of the intermediate key as the second ciphering key, and use a second preset bit of the intermediate key as the second integrity key; or
   the computation module comprises: a fourth computation unit, configured to compute the second ciphering key according to the first ciphering key, a first algorithm type indication, and an identifier of the ciphering algorithm, and a fifth computation unit, configured to compute the second integrity key according to the first integrity key, a second algorithm type indication, and an identifier of the integrity algorithm, wherein values of the first algorithm type indication and the second algorithm type indication are different; or
   the acquiring module is specifically configured to use the first ciphering key or a preset bit of the first ciphering key as the second ciphering key, and use the first integrity key or a preset bit of the first integrity key as the second integrity key.
Embodiment 34. The UE according to embodiment 32 or 33, wherein the first ciphering key is a ciphering key CK in an authentication vector quintet, and the first integrity key is an integrity key IK in the authentication vector quintet.
Embodiment 35. The UE according to embodiment 34, wherein the intermediate key is a 64-bit GPRS ciphering key Kc or a 128-bit ciphering key Kc₁₂₈.
Embodiment 36. A computer storage medium, wherein the computer storage medium stores a program, and when the program runs, the steps described in any one of embodiments 8 to 13 are performed.
Embodiment 37. User equipment UE, comprising a sending apparatus, a receiving apparatus, and a processor, wherein the sending apparatus, the receiving apparatus, and the processor are connected by using a bus;
   the sending apparatus is configured to send a request message to a serving GPRS support node SGSN;
   the receiving apparatus is configured to receive a ciphering algorithm and an integrity algorithm that are sent by the SGSN; and
   the processor is configured to acquire a second ciphering key and a second integrity key according to a first ciphering key and a first integrity key, wherein
   the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.
Embodiment 38. The UE according to embodiment 37, wherein the request message that is sent by the sending apparatus to the SGSN comprises UE type indication information, wherein the UE type indication information is used to indicate that the UE is UE of a first type.
Embodiment 39. The UE according to embodiment 37 or 38, wherein that the processor acquires a second ciphering key and a second integrity key according to a first ciphering key and a first integrity key comprises:
   computing, by the processor, an intermediate key according to the first ciphering key and the first integrity key, computing, by the processor, the second ciphering key according to the intermediate key and a ciphering characteristic string, and computing, by the processor, the second integrity key according to the intermediate key and an integrity characteristic string; or
   computing, by the processor, an intermediate key according to the first ciphering key and the first integrity key, computing, by the processor, the second ciphering key according to the intermediate key, a first algorithm type indication, and an identifier of the ciphering algorithm, and computing, by the processor, the second integrity key according to the intermediate key, a second algorithm type indication, and an identifier of the integrity algorithm, wherein values of the first algorithm type indication and the second algorithm type indication are different.
Embodiment 40. The UE according to embodiment 37 or 38, wherein that the processor acquires a second ciphering key and a second integrity key according to a first ciphering key and a first integrity key comprises:
   computing, by the processor, an intermediate key according to the first ciphering key and the first integrity key; and using, by the processor, a first preset bit of the intermediate key as the second ciphering key, and using a second preset bit of the intermediate key as the second integrity key; or
   computing, by the processor, the second ciphering key according to the first ciphering key, a first algorithm type indication, and an identifier of the ciphering algorithm, and computing, by the processor, the second integrity key according to the first integrity key, a second algorithm type indication, and an identifier of the integrity algorithm, wherein values of the first algorithm type indication and the second algorithm type indication are different; or
   using, by the processor, the first ciphering key or a preset bit of the first ciphering key as the second ciphering key, and using, by the processor, the first integrity key or a preset bit of the first integrity key as the second integrity key.
Embodiment 41. The UE according to embodiment 39 or 40, wherein the first ciphering key is a ciphering key CK in an authentication vector quintet, and the first integrity key is an integrity key IK in the authentication vector quintet.
Embodiment 42. The UE according to embodiment 41, wherein the intermediate key is a 64-bit GPRS ciphering key Kc or a 128-bit ciphering key Kc₁₂₈.
Embodiment 43. A home location register HLR/home subscription system HSS, comprising:
   a receiving module, configured to receive an identifier of user equipment UE that is sent by a serving GPRS support node SGSN;
   a determining module, configured to determine, according to the identifier of the UE, that the UE is UE of a first type; and
   a sending module, configured to send UE type indication information to the SGSN, wherein the UE type indication information is used to indicate that the UE is UE of the first type.
Embodiment 44. A computer storage medium, wherein the computer storage medium stores a program, and when the program runs, the steps described in embodiment 14 are performed.
Embodiment 45. A home location register HLR/home subscription system HSS, comprising a sending apparatus, a receiving apparatus, and a processor, wherein the sending apparatus, the receiving apparatus, and the processor are connected by using a bus;
   the receiving apparatus is configured to receive an identifier of user equipment UE that is sent by a serving GPRS support node SGSN;
   the processor is configured to determine, according to the identifier of the UE, that the UE is UE of a first type; and
   the sending apparatus is configured to send UE type indication information to the SGSN, wherein the UE type indication information is used to indicate that the UE is UE of the first type.
Embodiment 46. A GPRS system, wherein the GPRS system comprises a serving GPRS support node SGSN device, user equipment UE, and a home location register HLR/home subscription system HSS, wherein
   the SGSN device is configured to: receive a request message sent by the UE, acquire an authentication vector from the HLR/HSS, wherein the authentication vector comprises a first ciphering key and a first integrity key, if the SGSN determines that the UE is UE of a first type, select a ciphering algorithm and an integrity algorithm for the UE, send the selected ciphering algorithm and the selected integrity algorithm to the UE, and obtain a second ciphering key and a second integrity key according to the first ciphering key and the first integrity key; and
   the UE is configured to: send the request message to the SGSN, receive the ciphering algorithm and the integrity algorithm that are sent by the SGSN, and acquire the second ciphering key and the second integrity key according to the first ciphering key and the first integrity key, wherein
   the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.
Embodiment 47. The GPRS system according to embodiment 46, wherein the HLR/HSS is configured to:
   receive an identifier of the UE that is sent by the SGSN;
   determine, according to the identifier of the UE, that the UE is UE of the first type; and
   send UE type indication information to the SGSN, wherein the UE type indication information is used to indicate that the UE is UE of the first type.It should be noted that, for brief description, the foregoing method embodiments are represented as a series of actions. However, persons skilled in the art should appreciate that this application is not limited to the described order of the actions, because according to this application, some steps may be performed in other orders or simultaneously. It should be further appreciated by persons skilled in the art that the embodiments described in this specification all belong to exemplary embodiments, and the involved actions and modules are not necessarily required by this application.

In the foregoing embodiments, the description of each embodiment has respective focuses. For a part that is not described in detail in an embodiment, reference may be made to related descriptions in other embodiments.

Persons of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, and an optical disc.

The foregoing describes in detail the GPRS system key enhancement method, the SGSN device, the UE, the HLR/HSS, and the GPRS system provided in the embodiments of this application. Specific examples are used in this specification to describe the principle and implementation manners of this application. The descriptions of the foregoing embodiments are merely intended to facilitate understanding of the method and core idea of this application. In addition, with respect to the specific implementation manners and the application scope, modifications may be made by persons of ordinary skill in the art according to the idea of this application. In conclusion, the content of this specification shall not be understood as a limitation on this application.

## Claims

1. A GPRS system, wherein the GPRS system **characterized by** comprising a serving GPRS support node, SGSN, device (2301), and a home location register, HLR/home subscription system, HSS (2303), wherein
the SGSN device (2301) is configured to: receive a request message from user equipment, UE (2302), acquire an authentication vector from the HLR/HSS (2303), wherein the authentication vector comprises a first ciphering key and a first integrity key, when the request message comprises UE type indication information and the UE type indication information indicates that the UE (2302) is UE of a first type, determine that the UE (2302) is UE of the first type, select a ciphering algorithm and an integrity algorithm for the UE (2302), send the selected ciphering algorithm and the selected integrity algorithm to the UE (2302), and obtain a second ciphering key and a second integrity key according to the first ciphering key and the first integrity key; and
the HLR/HSS (2303) is configured to: send the authentication vector to the SGSN device (2301);
wherein the second ciphering key and the ciphering algorithm are used to perform ciphering protection on a message transmitted between the SGSN device (2301) and the UE (2302), and the second integrity key and the integrity algorithm are used to perform integrity protection on a message transmitted between the SGSN device (2301) and the UE (2302).

2. The system according to claim 1, wherein the system further comprises the UE (2302), wherein the UE (2302) is configured to:
send the request message to the SGSN device (2301), receive the ciphering algorithm and the integrity algorithm from the SGSN device (2301), and acquire the second ciphering key and the second integrity key according to the first ciphering key and the first integrity key.

3. The system according to claim 1 or 2, wherein:
the authentication vector is an authentication vector quintet; and
the first ciphering key is a ciphering key, CK, in the authentication vector quintet, and the first integrity key is an integrity key, IK, in the authentication vector quintet.

4. The system according to any one of claims 1 to 3, wherein the SGSN device (2301) is further configured to:
compute an intermediate key according to the first ciphering key and the first integrity key, compute the second ciphering key according to the intermediate key and a ciphering characteristic string, and compute the second integrity key according to the intermediate key and an integrity characteristic string; or
compute an intermediate key according to the first ciphering key and the first integrity key, compute the second ciphering key according to the intermediate key, a first algorithm type indication, and an identifier of the selected ciphering algorithm, and compute the second integrity key according to the intermediate key, a second algorithm type indication, and an identifier of the selected integrity algorithm, wherein values of the first algorithm type indication and the second algorithm type indication are different.

5. The system according to any one of claims 1 to 3, wherein the SGSN device (2301) is further configured to:
compute an intermediate key according to the first ciphering key and the first integrity key; and use a first preset bit of the intermediate key as the second ciphering key, and use a second preset bit of the intermediate key as the second integrity key; or
compute the second ciphering key according to the first ciphering key, a first algorithm type indication, and an identifier of the selected ciphering algorithm, and compute the second integrity key according to the first integrity key, a second algorithm type indication, and an identifier of the selected integrity algorithm, wherein values of the first algorithm type indication and the second algorithm type indication are different; or
use the first ciphering key or a preset bit of the first ciphering key as the second ciphering key, and use the first integrity key or a preset bit of the first integrity key as the second integrity key.

6. The system according to claim 4 or 5, wherein the intermediate key is a 64-bit GPRS ciphering key Kc or a 128-bit ciphering key Kc₁₂₈.

7. An apparatus, comprising at least one processor and a storage medium storing executable instructions, wherein the executable instructions, when executed by the at least one processor, cause the at least one processor to:
receive a request message from user equipment, UE;
acquire an authentication vector from a home location register, HLR/home subscription server, HSS, wherein the authentication vector comprises a first ciphering key and a first integrity key;
when the request message comprises UE type indication information and the UE type indication information indicates that the UE is UE of a first type, determine that the UE is UE of the first type, select a ciphering algorithm and an integrity algorithm for the UE, and send the selected ciphering algorithm and the selected integrity algorithm to the UE; and
obtain a second ciphering key and a second integrity key according to the first ciphering key and the first integrity key, wherein
the second ciphering key and the selected ciphering algorithm are used to perform ciphering protection on a message transmitted between a serving GPRS support node, SGSN, and the UE, and the second integrity key and the selected integrity algorithm are used to perform integrity protection on a message transmitted between the SGSN and the UE.

8. The apparatus according to claim 7, wherein the at least one processor is further configured to:
compute an intermediate key according to the first ciphering key and the first integrity key, compute the second ciphering key according to the intermediate key and a ciphering characteristic string, and compute the second integrity key according to the intermediate key and an integrity characteristic string; or
compute an intermediate key according to the first ciphering key and the first integrity key, compute the second ciphering key according to the intermediate key, a first algorithm type indication, and an identifier of the selected ciphering algorithm, and compute the second integrity key according to the intermediate key, a second algorithm type indication, and an identifier of the selected integrity algorithm, wherein values of the first algorithm type indication and the second algorithm type indication are different.

9. The apparatus according to claim 7 or 8, wherein:
the authentication vector is an authentication vector quintet; and
the first ciphering key is a ciphering key, CK, in the authentication vector quintet, and the first integrity key is an integrity key, IK, in the authentication vector quintet.

10. An apparatus, comprising at least one processor and a storage medium storing executable instructions, wherein the executable instructions, when executed by the at least one processor, cause the at least one processor to:
send a request message to a serving GPRS support node, SGSN, wherein the request message comprises user equipment, UE, type indication information, and the UE type indication information is used to indicate that UE is UE of a first type;
receive a ciphering algorithm and an integrity algorithm from the SGSN; and
acquire a second ciphering key and a second integrity key according to a first ciphering key and a first integrity key, wherein
the second ciphering key and the ciphering algorithm are used to perform ciphering protection on a message transmitted between the SGSN and the UE, and the second integrity key and the integrity algorithm are used to perform integrity protection on a message transmitted between the SGSN and the UE.

11. The apparatus according to claim 10, wherein the first ciphering key is a ciphering key, CK, in an authentication vector quintet, and the first integrity key is an integrity key, IK, in the authentication vector quintet.

## Patentansprüche

1. GPRS-System, wobei das GPRS-System **dadurch gekennzeichnet ist, dass** es eine "Serving GPRS Support Node"(SGSN)-Vorrichtung (2301) und ein Heimatregister (Home Location Register, HLR)/"Home Subscription System", HSS (2303) umfasst, wobei
die SGSN-Vorrichtung (2301) ausgelegt ist zum: Empfangen einer Anforderungsnachricht von einem Benutzergerät (User Equipment, UE) (2302), Erfassen eines Authentifikationsvektors von dem HLR/HSS (2303), wobei der Authentifikationsvektor einen ersten Verschlüsselungsschlüssel und einen ersten Integritätsschlüssel umfasst, wenn die Anforderungsnachricht UE-Typanzeigeinformationen umfasst und die UE-Typanzeigeinformationen anzeigen, dass das UE (2302) ein UE eines ersten Typs ist, Bestimmen, dass das UE (2302) ein UE des ersten Typs ist, Auswählen eines Verschlüsselungsalgorithmus und eines Integritätsalgorithmus für das UE (2302), Senden des ausgewählten Verschlüsselungsalgorithmus und des ausgewählten Integritätsalgorithmus an das UE (2302) und Gewinnen eines zweiten Verschlüsselungsschlüssels und eines zweiten Integritätsschlüssels gemäß dem ersten Verschlüsselungsschlüssel und dem ersten Integritätsschlüssel; und
das HLR/HSS (2303) ausgelegt ist zum: Senden des Authentifikationsvektors an die SGSN-Vorrichtung (2301);
wobei der zweite Verschlüsselungsschlüssel und der Verschlüsselungsalgorithmus verwendet werden, um einen Verschlüsselungsschutz an einer Nachricht auszuführen, die zwischen der SGSN-Vorrichtung (2301) und dem UE (2302) übertragen wird, und der zweite Integritätsschlüssel und der Integritätsalgorithmus verwendet werden, um einen Integritätsschutz an einer Nachricht auszuführen, die zwischen der SGSN-Vorrichtung (2301) und dem UE (2302) übertragen wird.

2. System nach Anspruch 1, wobei das System ferner das UE (2302) umfasst, wobei das UE (2302) ausgelegt ist zum:
Senden der Anforderungsnachricht an die SGSN-Vorrichtung (2301), Empfangen des Verschlüsselungsalgorithmus und des Integritätsalgorithmus von der SGSN-Vorrichtung (2301) und Erfassen des zweiten Verschlüsselungsschlüssels und des zweiten Integritätsschlüssels gemäß dem ersten Verschlüsselungsschlüssel und dem ersten Integritäts schlüssel.

3. System nach Anspruch 1 oder 2, wobei:
der Authentifikationsvektor ein Authentifikationsvektorquintett ist; und
der erste Verschlüsselungsschlüssel ein Verschlüsselungsschlüssel (Ciphering Key, CK) in dem Authentifikationsvektorquintett ist und der erste Integritätsschlüssel ein Integritätsschlüssel (Integrity Key, IK) in dem Authentifikationsvektorquintett ist.

4. System nach einem der Ansprüche 1 bis 3, wobei die SGSN-Vorrichtung (2301) ferner ausgelegt ist zum:
Berechnen eines Zwischenschlüssels gemäß dem ersten Verschlüsselungsschlüssel und dem ersten Integritätsschlüssel, Berechnen des zweiten Verschlüsselungsschlüssels gemäß dem Zwischenschlüssel und einer charakteristischen Zeichenkette der Verschlüsselung und Berechnen des zweiten Integritätsschlüssels gemäß dem Zwischenschlüssel und einer charakteristischen Zeichenkette der Integrität; oder
Berechnen eines Zwischenschlüssels gemäß dem ersten Verschlüsselungsschlüssel und dem ersten Integritätsschlüssel, Berechnen des zweiten Verschlüsselungsschlüssels gemäß dem Zwischenschlüssel, einer ersten Algorithmustypanzeige und einer Kennung des ausgewählten Verschlüsselungsalgorithmus und Berechnen des zweiten Integritätsschlüssels gemäß dem Zwischenschlüssel, einer zweiten Algorithmustypanzeige und einer Kennung des ausgewählten Integritätsalgorithmus, wobei Werte der ersten Algorithmustypanzeige und der zweiten Algorithmustypanzeige verschieden sind.

5. System nach einem der Ansprüche 1 bis 3, wobei die SGSN-Vorrichtung (2301) ferner ausgelegt ist zum:
Berechnen eines Zwischenschlüssels gemäß dem ersten Verschlüsselungsschlüssel und dem ersten Integritätsschlüssel; und Verwenden eines ersten voreingestellten Bits des Zwischenschlüssels als zweiten Verschlüsselungsschlüssel und Verwenden eines zweiten voreingestellten Bits des Zwischenschlüssels als zweiten Integritätsschlüssel; oder
Berechnen des zweiten Verschlüsselungsschlüssels gemäß dem ersten Verschlüsselungsschlüssel, einer ersten Algorithmustypanzeige und einer Kennung des ausgewählten Verschlüsselungsalgorithmus, und Berechnen des zweiten Integritätsschlüssels gemäß dem ersten Integritätsschlüssel, einer zweiten Algorithmustypanzeige und einer Kennung des ausgewählten Integritätsalgorithmus, wobei Werte der ersten Algorithmustypanzeige und der zweiten Algorithmustypanzeige verschieden sind; oder
Verwenden des ersten Verschlüsselungsschlüssels oder eines voreingestellten Bits des ersten Verschlüsselungsschlüssels als zweiten Verschlüsselungsschlüssel und Verwenden des ersten Integritätsschlüssels oder eines voreingestellten Bits des ersten Integritätsschlüssels als zweiten Integritätsschlüssel.

6. System nach Anspruch 4 oder 5, wobei der Zwischenschlüssel ein 64-Bit-GPRS-Verschlüsselungsschlüssel Kc oder ein 128-Bit-Verschlüsselungsschlüssel Kc₁₂₈ ist.

7. Einrichtung, welche wenigstens einen Prozessor und ein Speichermedium, das ausführbare Anweisungen speichert, umfasst, wobei die ausführbaren Anweisungen, wenn sie von dem wenigstens einen Prozessor ausgeführt werden, den wenigstens einen Prozessor veranlassen zum:
Empfangen einer Anforderungsnachricht von einem Benutzergerät (User Equipment, UE);
Erfassen eines Authentifikationsvektors von einem Heimatregister (Home Location Register, HLR)/"Home Subscription Server", HSS, wobei der Authentifikationsvektor einen ersten Verschlüsselungsschlüssel und einen ersten Integritätsschlüssel umfasst;
wenn die Anforderungsnachricht UE-Typanzeigeinformationen umfasst und die UE-Typanzeigeinformationen anzeigen, dass das UE ein UE eines ersten Typs ist, Bestimmen, dass das UE ein UE des ersten Typs ist, Auswählen eines Verschlüsselungsalgorithmus und eines Integritätsalgorithmus für das UE und Senden des ausgewählten Verschlüsselungsalgorithmus und des ausgewählten Integritätsalgorithmus an das UE; und
Gewinnen eines zweiten Verschlüsselungsschlüssels und eines zweiten Integritätsschlüssels gemäß dem ersten Verschlüsselungsschlüssel und dem ersten Integritätsschlüssel, wobei
der zweite Verschlüsselungsschlüssel und der ausgewählte Verschlüsselungsalgorithmus verwendet werden, um einen Verschlüsselungsschutz an einer Nachricht auszuführen, die zwischen einem "Serving GPRS Support Node", SGSN, und dem UE übertragen wird, und der zweite Integritätsschlüssel und der ausgewählte Integritätsalgorithmus verwendet werden, um einen Integritätsschutz an einer Nachricht auszuführen, die zwischen dem SGSN und dem UE übertragen wird.

8. Einrichtung nach Anspruch 7, wobei der wenigstens eine Prozessor ferner ausgelegt ist zum:
Berechnen eines Zwischenschlüssels gemäß dem ersten Verschlüsselungsschlüssel und dem ersten Integritätsschlüssel, Berechnen des zweiten Verschlüsselungsschlüssels gemäß dem Zwischenschlüssel und einer charakteristischen Zeichenkette der Verschlüsselung und Berechnen des zweiten Integritätsschlüssels gemäß dem Zwischenschlüssel und einer charakteristischen Zeichenkette der Integrität; oder
Berechnen eines Zwischenschlüssels gemäß dem ersten Verschlüsselungsschlüssel und dem ersten Integritätsschlüssel, Berechnen des zweiten Verschlüsselungsschlüssels gemäß dem Zwischenschlüssel, einer ersten Algorithmustypanzeige und einer Kennung des ausgewählten Verschlüsselungsalgorithmus und Berechnen des zweiten Integritätsschlüssels gemäß dem Zwischenschlüssel, einer zweiten Algorithmustypanzeige und einer Kennung des ausgewählten Integritätsalgorithmus, wobei Werte der ersten Algorithmustypanzeige und der zweiten Algorithmustypanzeige verschieden sind.

9. Einrichtung nach Anspruch 7 oder 8, wobei:
der Authentifikationsvektor ein Authentifikationsvektorquintett ist; und
der erste Verschlüsselungsschlüssel ein Verschlüsselungsschlüssel (Ciphering Key, CK) in dem Authentifikationsvektorquintett ist und der erste Integritätsschlüssel ein Integritätsschlüssel (Integrity Key, IK) in dem Authentifikationsvektorquintett ist.

10. Einrichtung, welche wenigstens einen Prozessor und ein Speichermedium, das ausführbare Anweisungen speichert, umfasst, wobei die ausführbaren Anweisungen, wenn sie von dem wenigstens einen Prozessor ausgeführt werden, den wenigstens einen Prozessor veranlassen zum:
Senden einer Anforderungsnachricht an einen "Serving GPRS Support Node", SGSN, wobei die Anforderungsnachricht Benutzergerät(User Equipment, UE)-Typanzeigeinformationen umfasst und die UE-Typanzeigeinformationen verwendet werden, um anzuzeigen, dass das UE ein UE eines ersten Typs ist;
Empfangen eines Verschlüsselungsalgorithmus und eines Integritätsalgorithmus von dem SGSN; und
Erfassen eines zweiten Verschlüsselungsschlüssels und eines zweiten Integritätsschlüssels gemäß einem ersten Verschlüsselungsschlüssel und einem ersten Integritätsschlüssel, wobei
der zweite Verschlüsselungsschlüssel und der Verschlüsselungsalgorithmus verwendet werden, um einen Verschlüsselungsschutz an einer Nachricht auszuführen, die zwischen dem SGSN und dem UE übertragen wird, und der zweite Integritätsschlüssel und der Integritätsalgorithmus verwendet werden, um einen Integritätsschutz an einer Nachricht auszuführen, die zwischen dem SGSN und dem UE übertragen wird.

11. Einrichtung nach Anspruch 10, wobei der erste Verschlüsselungsschlüssel ein Verschlüsselungsschlüssel (Ciphering Key, CK) in einem Authentifikationsvektorquintett ist und der erste Integritätsschlüssel ein Integritätsschlüssel (Integrity Key, IK) in dem Authentifikationsvektorquintett ist.

## Revendications

1. Système GPRS, le système GPRS étant **caractérisé en ce qu'**il comprend un dispositif nœud de prise en charge de GPRS de desserte (SGSN) (2301) et un enregistreur de localisation nominal (HLR)/système d'abonnement résidentiel (HSS) (2303),
le dispositif SGSN (2301) étant configuré pour : recevoir un message de demande en provenance d'un équipement d'utilisateur (UE) (2302), acquérir un vecteur d'authentification auprès du HLR/HSS (2303), le vecteur d'authentification comprenant une première clé de chiffrement et une première clé d'intégrité, quand le message de demande comprend une information d'indication de type d'UE et quand l'information d'indication de type d'UE indique que l'UE (2302) est un UE d'un premier type, déterminer que l'UE (2302) est un UE du premier type, sélectionner un algorithme de chiffrement et un algorithme d'intégrité pour l'UE (2302), envoyer l'algorithme de chiffrement sélectionné et l'algorithme d'intégrité sélectionné à l'UE (2302), et obtenir une seconde clé de chiffrement et une seconde clé d'intégrité selon la première clé de chiffrement et la première clé d'intégrité ; et
le HLR/HSS (2303) étant configuré pour : envoyer le vecteur d'authentification au dispositif SGSN (2301) ;
la seconde clé de chiffrement et l'algorithme de chiffrement étant utilisés pour mettre en œuvre une protection de chiffrement sur un message transmis entre le dispositif SGSN (2301) et l'UE (2302), et la seconde clé d'intégrité et l'algorithme d'intégrité étant utilisés pour mettre en œuvre une protection d'intégrité sur un message transmis entre le dispositif SGSN (2301) et l'UE (2302).

2. Système selon la revendication 1, le système comprenant en outre l'UE (2302), l'UE (2302) étant configuré pour :
envoyer le message de demande au dispositif SGSN (2301), recevoir l'algorithme de chiffrement et l'algorithme d'intégrité en provenance du dispositif SGSN (2301), et acquérir la seconde clé de chiffrement et la seconde clé d'intégrité selon la première clé de chiffrement et la première clé d'intégrité.

3. Système selon la revendication 1 ou 2, dans lequel :
le vecteur d'authentification est un quintet de vecteur d'authentification ; et
la première clé de chiffrement est une clé de chiffrement (CK) dans le quintet de vecteur d'authentification, et la première clé d'intégrité est une clé d'intégrité (IK) dans le quintet de vecteur d'authentification.

4. Système selon l'une quelconque des revendications 1 à 3, dans lequel le dispositif SGSN (2301) est en outre configuré pour :
calculer une clé intermédiaire selon la première clé de chiffrement et la première clé d'intégrité, calculer la seconde clé de chiffrement selon la clé intermédiaire et une chaîne caractéristique de chiffrement, et calculer la seconde clé d'intégrité selon la clé intermédiaire et une chaîne caractéristique d'intégrité ; ou
calculer une clé intermédiaire selon la première clé de chiffrement et la première clé d'intégrité, calculer la seconde clé de chiffrement selon la clé intermédiaire, une première indication de type d'algorithme et un identifiant de l'algorithme de chiffrement sélectionné, et calculer la seconde clé d'intégrité selon la clé intermédiaire, une seconde indication de type d'algorithme et un identifiant de l'algorithme d'intégrité sélectionné, des valeurs de la première indication de type d'algorithme et de la seconde indication de type d'algorithme étant différentes.

5. Système selon l'une quelconque des revendications 1 à 3, dans lequel le dispositif SGSN (2301) est en outre configuré pour :
calculer une clé intermédiaire selon la première clé de chiffrement et la première clé d'intégrité ; et utiliser un premier bit prédéfini de la clé intermédiaire en tant que seconde clé de chiffrement, et utiliser un second bit prédéfini de la clé intermédiaire en tant que seconde clé d'intégrité ; ou
calculer la seconde clé de chiffrement selon la première clé de chiffrement, une première indication de type d'algorithme et un identifiant de l'algorithme de chiffrement sélectionné, et calculer la seconde clé d'intégrité selon la première clé d'intégrité, une seconde indication de type d'algorithme et un identifiant de l'algorithme d'intégrité sélectionné, des valeurs de la première indication de type d'algorithme et de la seconde indication de type d'algorithme étant différentes ; ou
utiliser la première clé de chiffrement ou un bit prédéfini de la première clé de chiffrement en tant que seconde clé de chiffrement, et utiliser la première clé d'intégrité ou un bit prédéfini de la première clé d'intégrité en tant que seconde clé d'intégrité.

6. Système selon la revendication 4 ou 5, dans lequel la clé intermédiaire est une clé de chiffrement GPRS sur 64 bits (Kc) ou une clé de chiffrement sur 128 bits (Kc₁₂₈).

7. Appareil, comprenant au moins un processeur et un support de stockage stockant des instructions exécutables, les instructions exécutables, lorsqu'elles sont exécutées par l'au moins un processeur, amenant l'au moins un processeur à :
recevoir un message de demande en provenance d'un équipement d'utilisateur (UE) ;
acquérir un vecteur d'authentification auprès d'un enregistreur de localisation nominal (HLR)/serveur d'abonnement résidentiel (HSS), le vecteur d'authentification comprenant une première clé de chiffrement et une première clé d'intégrité ;
quand le message de demande comprend une information d'indication de type d'UE et quand l'information d'indication de type d'UE indique que l'UE est un UE d'un premier type, déterminer que l'UE est un UE du premier type, sélectionner un algorithme de chiffrement et un algorithme d'intégrité pour l'UE, et envoyer l'algorithme de chiffrement sélectionné et l'algorithme d'intégrité sélectionné à l'UE ; et
obtenir une seconde clé de chiffrement et une seconde clé d'intégrité selon la première clé de chiffrement et la première clé d'intégrité,
la seconde clé de chiffrement et l'algorithme de chiffrement sélectionné étant utilisés pour mettre en œuvre une protection de chiffrement sur un message transmis entre un nœud de prise en charge de GPRS de desserte (SGSN) et l'UE, et la seconde clé d'intégrité et l'algorithme d'intégrité sélectionnés étant utilisés pour mettre en œuvre une protection d'intégrité sur un message transmis entre le SGSN et l'UE.

8. Appareil selon la revendication 7, dans lequel l'au moins un processeur est en outre configuré pour :
calculer une clé intermédiaire selon la première clé de chiffrement et la première clé d'intégrité, calculer la seconde clé de chiffrement selon la clé intermédiaire et une chaîne caractéristique de chiffrement, et calculer la seconde clé d'intégrité selon la clé intermédiaire et une chaîne caractéristique d'intégrité ; ou
calculer une clé intermédiaire selon la première clé de chiffrement et la première clé d'intégrité, calculer la seconde clé de chiffrement selon la clé intermédiaire, une première indication de type d'algorithme et un identifiant de l'algorithme de chiffrement sélectionné, et calculer la seconde clé d'intégrité selon la clé intermédiaire, une seconde indication de type d'algorithme et un identifiant de l'algorithme d'intégrité sélectionné, des valeurs de la première indication de type d'algorithme et de la seconde indication de type d'algorithme étant différentes.

9. Appareil selon la revendication 7 ou 8, dans lequel :
le vecteur d'authentification est un quintet de vecteur d'authentification ; et
la première clé de chiffrement est une clé de chiffrement (CK) dans le quintet de vecteur d'authentification, et la première clé d'intégrité est une clé d'intégrité (IK) dans le quintet de vecteur d'authentification.

10. Appareil, comprenant au moins un processeur et un support de stockage stockant des instructions exécutables, les instructions exécutables, lorsqu'elles sont exécutées par l'au moins un processeur, amenant l'au moins un processeur à :
envoyer un message de demande à un nœud de prise en charge de GPRS de desserte (SGSN), le message de demande comprenant une information d'indication de type d'équipement d'utilisateur (UE), et l'information d'indication de type d'UE étant utilisée pour indiquer que l'UE est un UE d'un premier type ;
recevoir un algorithme de chiffrement et un algorithme d'intégrité en provenance du SGSN ; et
acquérir une seconde clé de chiffrement et une seconde clé d'intégrité selon une première clé de chiffrement et une première clé d'intégrité,
la seconde clé de chiffrement et l'algorithme de chiffrement étant utilisés pour mettre en œuvre une protection de chiffrement sur un message transmis entre le SGSN et l'UE, et la seconde clé d'intégrité et l'algorithme d'intégrité étant utilisés pour mettre en œuvre une protection d'intégrité sur un message transmis entre le SGSN et l'UE.

11. Appareil selon la revendication 10, dans lequel la première clé de chiffrement est une clé de chiffrement (CK) dans un quintet de vecteur d'authentification, et la première clé d'intégrité est une clé d'intégrité (IK) dans le quintet de vecteur d'authentification.
